(19) Europäisches Patentamt
European Patent Office
Office européen des brevets

(11) EP 2 225 289 B1

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **08864988.4**

(22) Anmeldetag: **16.12.2008**

(51) Int Cl.:
***C08F 6/00*** *(2006.01)* ***C08F 2/24*** *(2006.01)*
*C08L 33/00* *(2006.01)*

(86) Internationale Anmeldenummer:
**PCT/EP2008/067620**

(87) Internationale Veröffentlichungsnummer:
**WO 2009/080614 (02.07.2009 Gazette 2009/27)**

(54) **VERFAHREN ZUR HERSTELLUNG WÄSSRIGER POLYMERISATDISPERSIONEN**

METHOD FOR THE PRODUCTION OF AQUEOUS POLYMER DISPERSIONS

PROCÉDÉ DE FABRICATION DE DISPERSIONS POLYMÈRES AQUEUSES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.12.2007 EP 07150307**

(43) Veröffentlichungstag der Anmeldung:
**08.09.2010 Patentblatt 2010/36**

(73) Patentinhaber: **BASF SE**
**67056 Ludwigshafen am Rhein (DE)**

(72) Erfinder:
- **JAHNS, Ekkehard**
  **69469 Weinheim (DE)**
- **ROLLER, Sebastian**
  **68167 Mannheim (DE)**

(74) Vertreter: **BASF IP Association**
**BASF SE**
**G-FLP-C006**
**67056 Ludwigshafen (DE)**

(56) Entgegenhaltungen:
**WO-A-03/029300** **WO-A-2008/152017**
**DE-A1- 19 514 266** **JP-A- 8 337 738**
**US-A- 5 468 799** **US-A1- 2004 191 199**

- **RAMAZAN COSKUN, CENGIZ SOYKAN, ALI DELIBAS: "Study of free radical copolymerization of itaconic acid/2-acrylamido-2-methyl-1-propanesulfon ic acid and their metal chelates" EUROPEAN POLYMER JOURNAL, Bd. 42, Nr. 3, 2006, Seiten 625-637, XP002524370**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 225 289 B1

## Beschreibung

Die vorliegende Erfindung betrifft eine wäßrige Polymerisatdispersion, dass deren in disperser Verteilung befindliches Polymerisat P, dadurch gekennzeichnet ist, dass das Polymerisat P der wäßrigen Polymerisatdispersion wenigstens ein polares Monomeres mit einer Wasserlöslichkeit von größer als 50g/Liter (gemessen bei 20 °C) in radikalisch polymerisierter Form einpolymerisiert enthält, erhältlich durch radikalisch initiierte wässrige Emulsionspolymerisation, wobei das polare Monomere während des Polymerisationsprozesses mit variabler, das heißt nicht konstanter Geschwindigkeit, z.B. im Sinne eines Geschwindigkeitsgradienten, zum Reaktionsgemisch dosiert wird, und es sich bei dem Verfahren nicht um ein mehrstufiges Verfahren handelt, bei dem 0,1 bis 10 Gew.-% der polaren Monomere I oder II in einer ersten Stufe vorgelegt werden und in einer sich daran anschließenden zweiten Polymerisationsstufe die Restmenge der polaren Monomere dem wässrigen Polymerisationsmedium unter Polymerisationsbedingungen zugegeben und polymerisiert werden.

Weiterhin betrifft die vorliegende Erfindung Verfahren zur Herstellung dieser wässrigen Polymerisatdispersionen sowie deren Verwendung als Bindemittel und/oder in Beschichtungen, sowie Beschichtungen enthaltend die anspruchsgemäße Polymerisatdispersion.

Wäßrige Polymerisatdispersionen des Standes der Technik für die Verwendung als Bindemittel oder in Beschichtungen werden üblicherweise unter Mitverwendung von stabilisierenden Monomeren hergestellt. Dies sind zum Beispiel Acrylsäure oder Acrylamid. Diese stabilisierenden Monomere sind aber auch polar und können einige Nachteile bei der Verwendung dieser Dispersionen als Bindemittel oder in Beschichtungen mit sich bringen. Ein Nachteil ist zum Beispiel eine höhere Wasseraufnahme der Filme, die oftmals unerwünscht ist. Diese Wasseraufnahme birgt die Gefahr, dass niedermolekulare Bestandteile der Beschichtung, beispielsweise oberflächenaktive Substanzen, die bei der Herstellung der wässrigen Zubereitungen häufig eingesetzt werden, bei längerer Bewitterung ausgespült werden. Die Wasseraufnahme äußert sich beispielsweise in einem verstärkten Weißanlaufverhalten oder einer Versprödung der Beschichtung. Zudem hat die Wasseraufnahme aufgrund der mit ihr einhergehenden Quellung des Polymeren eine Verringerung der mechanischen Stabilität einer Beschichtung zur Folge. Zudem besteht bei pigmenthaltigen Beschichtungen die Gefahr, dass sich der Farbeindruck aufgrund der Wasseraufnahme oder des Weißanlaufs der Beschichtung nachteilig verändert.

Wäßrige Polymerisatdispersionen des Standes der Technik werden als Bindemittel oder als Zusätze für mineralische und nichtmineralische Stoffe sowie in Beschichtungsmitteln, insbesondere zur Beschichtung von Holz, Glas, Kunststoffen, Metallen, mineralischen Oberflächen und mineralischen Formkörpern, wie Betondachsteinen oder Slurrybetondachsteinen, Pflastersteinen, Faserzementbeschichtungen, Bitumenbeschichtungen und Bindemittel für Buntsteinputze verwendet, die sich durch eine geringe Wasseraufnahme auszeichnen sollen und zugleich auch bei längerer Einwirkung von Feuchtigkeit ihre Festigkeit und ihr optisches Erscheinungsbild nicht nachteilig verändern sollen.

Buntsteinputze bestehen aus gefärbten Sand- oder Natursteinpartikeln in Millimetergröße und einem meist transparenten Bindemittel, das die gesamte Beschichtung nach dem Trocknen zusammenhält. Buntsteinputze werden oft im Außenbereich von Gebäuden vornehmlich im Sockelbereich angewendet. Dort sind sie in besonderem Maße den Witterungseinflüssen wie Regen oder Spritzwasser ausgesetzt. Sie sind zudem leicht einzusehen und sollten frei von einer sichtbaren Wasseraufnahme, z. B. in Form von Weißanlaufen sein.

Bitumenbeschichtungen schützen bituminöse Dachbaustoffe in Form von transparenten oder eingefärbten Beschichtungen. Sie sind oft dunkel gefärbt, z. B. rot oder auch schwarz. Bei diesen dunklen Beschichtungen fallen negative Einflüsse auf das Bindemittel, wie eine höhere Wasseraufnahme oder ein Weißanlaufen besonders stark ins Auge.

Unter mineralischen Formkörpern sind hier und im Folgenden insbesondere Formkörper zu verstehen, die ein mineralisches Bindemittel aufweisen. Konkret wird hierunter ein Formkörper verstanden, der aus einem Gemisch (einem Mörtel) aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton und/oder Zement, die durch anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigt.

Die Zuschläge bestehen in der Regel aus körnigem oder faserförmigem natürlichem oder künstlichem Gestein (Kies, Sand, Mineralfasern), in Sonderfällen auch aus Metallen oder organischen Zuschlägen oder aus Gemischen der genannten Zuschläge, mit Korngrößen oder Faserlängen die dem jeweiligen Verwendungszweck in an sich bekannter Weise angepasst sind. Häufig werden zum Zweck der Farbgebung auch Buntpigmente als Zuschläge mit verwendet.

Als Hilfsmittel kommen insbesondere solche Substanzen in Betracht, die das Erhärten beschleunigen oder

verzögern oder die die Elastizität oder Porosität des verfestigten mineralischen Formkörpers beeinflussen. Hierbei handelt es sich insbesondere um Polymerisate, wie sie z.B. aus der US-A 4,340,510, der GB-PS 15 05 558, der US-A 3,196,122, der US-A 3,043,790, der US-A 3,239,479, der DE-A 43 17 035, der DE-A 43 17 036, der JP-A 91/1131 533 und anderen Schriften bekannt sind.

Beispiele für erfindungsgemäß zu beschichtende mineralische Formkörper sind z. B. Betonröhren, wie sie zum Transport von Abwasser angewendet werden (vgl. z.B. JP-A 55/144 273), Betondachsteine (vgl. z.B. DE-A 21 64 256 oder DE-A 39 01 073) oder Randsteine, Treppenstufen, Bodenplatten, Sockelplatten auf der Basis mineralischer Bindemittel sowie Faserzementplatten, d. h. flächige mineralische Formkörper, die mit anorganischen oder organischen Fasern, z. B. Polyester- oder Nylonfasern, gefüllt sind.

Nachteilig an mineralischen Formkörpern ist, dass unter dem Einfluss der Witterung (insbesondere der Einwirkung von Wasser) die kationischen Bestandteile wie $Ca^{2+}$ im Laufe der Zeit herausgelöst werden, was ihre Festigkeit mindert. Eine weitere nachteilige Eigenschaft mineralischer Formkörper ist das Auftreten von Ausblüherscheinungen. Diese sind vermutlich darauf zurückzuführen, dass die mineralischen Bindemittel mehrwertige Kationen wie $Ca^{2+}$ in alkalischer Umgebung enthalten. Durch Reaktion mit dem Kohlendioxid aus der Luft können sich so an der Oberfläche der mineralischen Formkörper in Wasser schwerlösliche unansehnliche weiße Kalkflecken ausbilden. Das Erscheinungsbild des Ausblühens kann sowohl bereits während des Erhärtens von frisch zubereiteten mineralischen Formkörpern als auch unter der Einwirkung der Witterung auf bereits erhärteten mineralischen Formkörpern auftreten.

Zur Vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als filmbildenden Bestandteil eine wässrige Polymerisatdispersion enthalten. Übliche Bindemittel umfassen Styrol/Acrylester-Copolymerisate, Homo- und Copolymerisate des Vinylacetats, Reinacrylate und ähnliche (vgl. z. B. DE 21 64 256). Die damit erhältlichen Beschichtungen vermochten jedoch den Durchtritt der kationischen Bestandteile (Ausblühen) nicht in befriedigender Weise zu verhindern. Zudem schmutzen derartige Beschichtungen leicht an.

Da Kalkausblühungen schon bei der Abbindung des Zements entstehen, ist es wichtig, die Beschichtung als Ausblühschutz schon auf dem noch nicht gehärteten Beton, der als grüner Beton bezeichnet wird, zu applizieren. Nach der Härtung bzw. Abbindung kann gegebenenfalls noch eine zweite oder weitere Beschichtung mit einer Farbe oder einem Klarlack und jeweils anschließender Trocknung erfolgen.

Zur Glättung oder Farbgebung von mineralischen Formkörpern, insbesondere von Betondachsteinen, kann auch eine zementgebundene mineralische Beschichtungsmasse (sogenannter Zement-Slurry) verwendet werden. Diese besteht im Wesentlichen aus Zement, Wasser und Pigmenten sowie gegebenenfalls aus Feinstsänden. Diese Beschichtungsmasse wird unmittelbar nach ihrer Applikation auf den Betonformkörper und vor der Aushärtung bzw. Abbindung mit einem transparenten Lack beschichtet. Der Lack hat hierbei die Aufgabe, Kalkausblühungen zu verhindern und die Bewitterungsbeständigkeit zu verbessern. Der bei diesem Verfahren aufgetragene transparente Lack beeinflusst stark den Glanz des ausgehärteten Betonformkörpers.

Die üblicherweise zur Beschichtung von mineralischen Formkörpern verwendeten Dachsteinfarben oder Klarlacke auf der Basis wässriger Polymerdispersionen führen zwar zu einem ausreichenden Ausblühschutz oder einer akzeptabel niedrigen Anschmutzneigung, ergeben aber bei der Beschichtung von eingefärbten zementgebundenen mineralischen Beschichtungsmassen nach dem Aushärten und der Trocknung des Klarlacks nur sehr matte Oberflächen.

Aus der DE-A 38 27 975 und der DE-A 40 03 909 sind Beschichtungen für Betonsteine auf der Basis wässriger Polymerisatdispersionen, die wenigstens ein aromatisches Keton als Fotosensibilisator enthalten, bekannt. Durch den Fotosensibilisator kommt es zu einer oberflächlichen Vernetzung der Beschichtung. Zwar lassen sich so die unerwünschten Ausblüherscheinungen weitgehend vermindern, jedoch sind die Beschichtungen bei längerer Bewitterung nicht stabil.

Der Schutz mineralischer Formkörper vor den oben beschriebenen Ausblühungen konnte auch durch Beschichtungsmassen auf der Basis von Styrol/Acrylat-Dispersionen bzw. Reinacrylatdispersionen der EP-A 469 295 und der DE-A 195 14 266 verbessert werden. Hierfür empfiehlt die EP-A 469 295 die Verwendung eines speziellen anionischen Emulgators und die DE-A 195 14 266 die Verwendung von Polymerisaten, welche spezielle Monomere mit Sulfonatgruppen einpolymerisiert enthalten.

In der DE 103 43 726 werden beschichtete Betonformkörper offenbart, die sich durch guten Ausblühschutz durch die Verwendung einer wässrigen Polymerdispersion und einem anionischen Emulgator mit mindestens einer Phosphat- und/oder Phosphonatgruppe auszeichnen.

Die EP 915 071 offenbart Beschichtungen auf der Basis von Copolymeren ethylenisch ungesättigter Monomere enthaltend mehr als 0,2 bis 5 Gew.-% Itaconsäure. Verfahren zur Konservierung von Betondachsteinen mit einer wässrigen Polymerisatdispersion enthaltend ein Polymerisat P, dass vorzugsweise 2-Acrylamido-2-methyl-propansulfonsäure in radikalisch polymerisierter Form einpolymerisiert enthält, werden in der EP 821 660 offenbart.

WO 2008/152017 offenbart ein mehrstufiges Verfahren zur Herstellung einer wässrigen Polymerisatdispersion mit enger Teilchengrössenverteilung, unter Verwendung von 2-Acrylamido-2-mthylpropansulfonsäure, wobei 0,1 bis 10 Gew.-% der polaren Monomere in einer ersten Stufe vorgelegt werden.

Die Beschichtungen des Standes der Technik haben alle den Nachteil, dass ihre Wasseraufnahme vergleichsweise hoch ist. Diese Wasseraufnahme birgt die Gefahr, dass niedermolekulare Bestandteile der Beschichtung, beispielsweise oberflächenaktive Substanzen, die bei der Herstellung der wässrigen Zubereitungen häufig eingesetzt werden, bei längerer Bewitterung ausgespült werden. Die Wasseraufnahme äußert sich beispielsweise in einem verstärkten Weißanlaufverhalten oder einer Versprödung der Beschichtung. Zudem hat die Wasseraufnahme aufgrund der mit ihr einhergehenden Quellung des Polymeren eine Verringerung der mechanischen Stabilität der Beschichtung und eine Erhöhung der Oberflächenrutschigkeit zur Folge, was aus Sicherheitsgründen ebenfalls unerwünscht ist. Zudem besteht bei pigmenthaltigen Beschichtungen die Gefahr, dass sich der Farbeindruck aufgrund der Wasseraufnahme der Beschichtung nachteilig verändert.

Der vorliegenden Erfindung lag somit die Aufgabe zugrunde, Bindemittel und Zusätze für mineralische und nichtmineralische Stoffe sowie Beschichtungsmittel, insbesondere zur Beschichtung von Holz, Glas, Kunststoffen, Metallen, mineralischen Oberflächen und mineralischen Formkörpern, wie Betondachsteinen oder Slurrybetondachsteinen, Pflastersteinen, Faserzementbeschichtungen, Bitumenbeschichtungen und Bindemittel für Buntsteinputze, bereitzustellen, die sich durch eine geringe Wasseraufnahme auszeichnen und zugleich auch bei längerer Einwirkung von Feuchtigkeit ihre Festigkeit und ihr optisches Erscheinungsbild nicht nachteilig verändern.

Die anspruchsgemäßen Beschichtungen sollen sich ebenfalls durch ein exzellentes Weißanlaufverhalten auszeichnen.

Überraschenderweise wurde gefunden, dass die Wasseraufnahme und das optische Erscheinungsbild von Beschichtungen auf der Basis einer wäßrigen Polymerisatdispersion, deren in disperser Verteilung befindliches Polymerisat P, dadurch gekennzeichnet ist, dass das Polymerisat P der wäßrigen Polymerisatdispersion wenigstens ein polares Monomeres mit einer Wasserlöslichkeit von größer als 50g/Liter (gemessen bei 20 °C) in radikalisch polymerisierter Form einpolymerisiert enthält, sowie erhältlich ist durch radikalisch initiierte wässrige Emulsionspolymerisation, wobei das polare Monomere während des Polymerisationsprozesses mit variabler, das heißt nicht konstanter Geschwindigkeit, z. B. im Sinne eines Geschwindigkeitsgradienten, zum Reaktionsgemisch dosiert wird, verbessert werden kann.

"Unter Wasserlöslichkeit versteht man die Eigenschaft von Stoffen, in Wasser klare Lösungen zu bilden. Voraussetzung sind dissoziationsfähige Salzgruppen oder eine bestimmte Anzahl hydrophiler Gruppen, die gleichmäßig über das Molekül verteilt sind". (Zitat: Thieme Römpp Chemielexikon Online, 2007). Die Wasserlöslichkeit eines Stoffes kann man bestimmen, indem man den Stoff zum Wasser gibt, umrührt und/oder schüttelt, und nach einigen Minuten beurteilt, dass man noch eine klare Lösung ohne Trübung erhält. Der Begriff "Wasserlöslichkeit" meint demzufolge die maximale Menge eines Stoffes in Wasser, die gerade noch eine klare Lösung ergibt. Da die Wasserlöslichkeit oft stark von der Temperatur des Wassers abhängt, ist der Begriff "Wasserlöslichkeit" immer auf eine bestimmte Temperatur festzulegen. Im vorliegenden Fall ist die Wasserlöslichkeit auf 20 °C festgelegt. Angegeben wird im vorliegenden Fall die Wasserlöslichkeit in Gramm des gelösten Stoffes in einem Liter Lösung, hergestellt aus dem Stoff und Wasser, oder abgekürzt "g/Liter".

Vorzugsweise versteht man unter der anspruchsgemäßen wässrigen Polymerisatdispersion eine wäßrige Polymerisatdispersion, deren in disperser Verteilung befindliches Polymerisat P wenigstens eine ethylenisch ungesättigte Säure und/oder deren konjugierte Base in radikalisch polymerisierter Form einpolymerisiert enthält, dadurch gekennzeichnet, dass das Polymerisat P der wäßrigen Polymerisatdispersion wenigstens ein Monomeres der allgemeinen Formel I

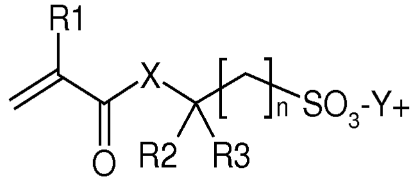

(I)

in der die Variablen folgende Bedeutung haben:

n = 0 bis 2,
R1, R2, R3 = unabhängig voneinander Wasserstoff oder Methylgruppe,
X = O oder NH,
Y = H, Alkalimetall, $NH_4$,

sowie wenigstens ein radikalisch polymerisierbares Monomeres II, welches mindestens zwei COOX-Gruppen (wobei X = H, Metall) in radikalisch polymerisierter Form einpolymerisiert enthält, erhältlich durch radikalisch initiierte wässrige Emulsionspolymerisation, wobei mindestens eines der beiden Monomere I oder II während des Polymerisationsprozesses mit variabler, das heißt nicht konstanter Geschwindigkeit, z. B. im Sinne eines Geschwindigkeitsgradienten, zum Reaktionsgemisch dosiert werden, und es sich bei dem Verfahren nicht um

ein mehrstufiges Verfahren handelt, bei dem 0,1 bis 10 Gew.-% der polaren Monomere I oder II in einer ersten Stufe vorgelegt werden und in einer sich daran anschließenden zweiten Polymerisationsstufe die Restmenge der polaren Monomere dem wässrigen Polymerisationsmedium unter Polymerisationsbedingungen zugegeben und polymerisiert werden.

Weiterhin betrifft die vorliegende Erfindung ein Verfahren zur Herstellung der anspruchsgemäßen wässrigen Polymerisatdispersion sowie deren Verwendung als Bindemittel und/oder Zusatzmittel für mineralische und nichtmineralische Stoffe sowie deren Verwendung in Beschichtungsmitteln, insbesondere zur Beschichtung von Holz, Glas, Kunststoffen, Metallen, mineralischen Oberflächen und mineralischen Formkörpern, wie Betondachsteinen oder Slurrybetondachsteinen, Pflastersteinen, Faserzementbeschichtungen, Bitumenbeschichtungen oder als Bindemittel für Buntsteinputze.

Ein weiterer Gegenstand der Erfindung sind Beschichtungen enthaltend die erfindungsgemäße wässrige Polymerisatdispersion sowie mineralische Formkörper enthaltend die anspruchsgemäßen Polymerisatdispersionen.

Durch die Zugabe der polaren Monomere mit einer Wasserlöslichkeit von größer als 50g/Liter (gemessen bei 20 °C) während des Polymerisationsprozesses erhält man erheblich verbesserte Bindemittel und Beschichtungen verglichen zu denen, die aus Dispersionen resultieren, bei denen die polaren Monomere wie üblich linear während der Polymerisation dosiert werden. Insbesondere die Wasserempfindlichkeit und die Weißanlaufbeständigkeit werden durch die erfindungsgemäße Herstellweise teilweise deutlich verbessert.

Auch durch die Zugabe der Monomere I und II allein nach der Gradientenfahrweise erhält man erheblich verbesserte Beschichtungen für mineralische Formkörper, insbesondere für Betondachsteine und Slurrybetondachsteine.

Durch die optimal eingestellten Wechselwirkungen der wässrigen Beschichtung mit den auf der Formkörperoberfläche befindlichen Ionen, insbesondere $Ca^{2+}$ Ionen, wird einerseits Versickern, andererseits Koagulation des wässrigen Beschichtungsmittels vermieden. Überraschenderweise wurde gefunden, dass im Gegensatz zu einer linearen Dosierung die beschriebene Dosierung der Hilfsmonomeren die Herstellung von Dispersionen für transparente Beschichtungen für mineralische Formkörper, insbesondere Betondachsteine und Slurrybetondachsteine, ermöglicht, die einen exzellenten Ausblühschutz bei gleichzeitig exzellentem Weißanlaufverhalten gewährleisten.

Wässrige Polymerisatdispersionen, deren in disperser Verteilung befindliches Polymerisat wenigstens ein polares Monomeres mit einer Wasserlöslichkeit von mehr als 50g/Liter in radikalisch polymerisierbarer Form einpolymerisiert enthält, sind bekannt.

Unter den polaren Monomeren mit einer Wasserlöslichhkeit von mehr als 50 g/Liter (gemessen bei 20 °C) versteht man beispielsweise a,ß-monoethylenisch ungesättigte Mono- und Dicarbonsäuren, Mono- und Diphosphonsäuren und Phosphate und deren Amide beispielsweise:

Acrylsäure, Methacrylsäure, Maleinsäure, Fumarsäure, Itaconsäure, Aconitsäure, Mesaconsäure, Crotonsäure, Citraconsäure, Acryloxypropionsäure, Methacryloxypropionsäure, Vinylessigsäure, Monomethylitaconat, Mono-methylfumarat, Monobutylfumarat, Acrylsäureanhydrid, Methacrylsäureanhydrid, Maleinsäureanhydrid, oder Itaconsäureanhydrid,

Acrylamidoglykolsäure und Methacrylamidoglykolsäure, Acrylamid, Methacrylamid, und Isopropylacrylamid, substituierte (Meth)acrylamide, wie z.B. N,N-Dimethylamino(meth)acrylat; 3-Dimethylamino-2,2-dimethylpropyl-1-(meth)-acrylat, N-Dimethylaminomethyl(meth)acrylamid, N-(4-morpholinomethyl)(meth)acrylamide, Diacetonacrylamid; Acetoacetoxvethvlmethacrylat; N-Methylol(meth)acrylamid, Polyethylenoxid(meth)acrylat, Methoxypolyethylenoxid(meth)acrylat, Acrolein, Methacrolein; N-(2-Methacryloxyethyl)ethylenharnstoff, 1-(2-(3-Allyloxy-2-hydroxypropylamino) ethyl)-imidazolidin-2-on, Ureido(meth)acrylat, 2-Ethylenureidoethylmethactylat,

Vinylsulfonsäure, 2-Acrylamido-2-methyl-propansulfonsäure (AMPS), Methacrylsäure-(3'-sulfopropyl)-ester, Acrylsäure-(3'-sulfopropyl)-ester, Methacrylsäure-(2'-sulfoethyl)-ester, Ethylmethacrylat-2-sulphonsäure, Vinylbenzolsulfonsäure, Styrolsulfonsäure,

Vinylphosphonsäure, mit Phosphat- und /oder Phosphonatgruppen copolymerisierbar modifizierte Alkoholetherphosphate, wie z.B. Phosphoethyl(meth)acrylat;und deren wasserlösliche Salze.

Hydroxyethyl(meth)acrylat und Hydroxypropyl(meth)acrylate; 4-Hydroxybutylacrylat, 4-Hydroxybutylmethacrylat, Glycidyl(meth)acrylat, sowie N-Vinylpyrrolidon, Vinylimidazol.

Selbstverständlich kommen auch die Alkalimetallsalze oder die Ammoniumsalze der vorgenannten Säuren als mögliche Monomere in Betracht, insbesondere ihre Natriummetall- und Kaliummetallsalze. Selbstverständlich kann man anspruchsgemäß säureartige Monomere, deren Wasserlöslichkeit kleiner als 50g/Liter (gemessen bei 20°C) ist, auch

als ihre Alkalimetallsalze oder Ammoniumsalze verwenden, wenn ihre Wasserlöslichkeit dadurch größer als 50g/Liter (gemessen bei 20°C) wird.

Anspruchsgemäß günstige Monomere der allgemeinen Formel I sind beispielsweise:

-2-Acrylamido-2-methyl-propansulfonsäure (AMPS)
-Methacrylsäure-(3'-sulfopropyl)-ester
-Acrylsäure-(3'-sulfopropyl)-ester
-Methacrylsäure-(2'-sulfoethyl)-ester

Anspruchsgemäß günstige Monomere II sind beispielsweise:

-Itaconsäure
-Aconitsäure
-Mesaconsäure

Unter den Alkalimetallsalzen der Monomeren der allgemeinen Formel I eignen sich insbesondere die Natrium-, Ammonium- und Kaliummetallsalze.

Mit Vorteil enthält das in disperser Verteilung befindliche Polymerisat P der anspruchsgemäß zu verwendenden wäßrigen Polymerisatdispersion, bezogen auf sein Gewicht, 0,1 bis 5, vorzugsweise 0,2 bis 2, besonders bevorzugt 0,2 bis 1,5 und ganz besonders bevorzugt 0,3 bis 1 Gew.-% wenigstens eines Monomeren der allgemeinen Formel I sowie 0,2 bis 5, vorzugsweise 0,5 bis 2, besonders bevorzugt 0,5 bis 1,5 und ganz besonders bevorzugt 0,7 bis 1,2 Gew.-% des Monomeren II.

Zweckmäßigerweise erfolgte die Herstellung des anspruchsgemäß zu verwendenden Polymerisats P nach der Methode der radikalischen Polymerisation, wobei als Comonomere der Monomere I und II von diesen verschiedene, wenigstens eine ethylenisch ungesättigte Gruppe aufweisende Monomere in Betracht kommen. Als solche eignen sich z.B. Olefine wie Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat, Vinylpivalat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl-, -n-butyl-, -iso-butyl-, -tert.-butyl- und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren. Die genannten Monomeren bilden in der Regel die Hauptmonomeren, die, bezogen auf die Gesamtmenge der zu polymerisierenden Monomeren, normalerweise einen Anteil von wenigstens 90 Gew.-% auf sich vereinen. In aller Regel weisen diese Monomeren in Wasser bei Normalbedingungen (25°C, 1 atm) lediglich eine geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide wie z. B. Acrylsäure, Methacrylsäure, Maleinsäure, Fumarsäure, Itaconsäure, Acrylamid und Methacrylamid, ferner Vinylsulfonsäure und deren wasserlösliche Salze wie N-Vinylpyrrolidon. Selbstverständlich kommen auch die Alkalimetallsalze oder das Ammoniumsalz der vorgenannten Säuren als mögliche Monomere in Betracht, insbesondere ihre Natriummetall- und Kaliummetallsalze. Diese Monomeren, die eine erhöhte Wasserlöslichkeit aufweisen, werden im Normalfall in das Polymerisat P lediglich in solchen Mengen einpolymerisiert, dass ihre Menge zusammen mit der Menge der einzupolymerisierenden Monomeren der allgemeinen Formel I und II, bezogen auf die Gesamtmenge der zu polymerisierenden Monomeren, 10 Gew.-%, vorzugsweise 5 Gew.-%, nicht übersteigt. Höhere Gehalte dieser Monomeren mindern in der Regel die Wasserfestigkeit der erfindungsgemäßen konservierenden Beschichtung.

Monomere, die üblicherweise die innere Festigkeit von Verfilmungen wäßriger Polymerisatdispersionen erhöhen, weisen normalerweise wenigstens eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkanolen, unter denen das N-Methylolacrylamid und das N-Methylolmethacrylamid ganz besonders bevorzugt sind , zwei Vinylreste aufweisende Monomere, zwei Vinylidenreste aufweisende Monomere sowie zwei Alkenylreste aufweisende Monomere. Besonders vorteilhaft sind dabei die Diester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,3-Butylenglykoldiacrylat, 1,4-Butylenglykoldiacrylat sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_{1-8}$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat, Ureidoethylmethacrylat und Acrylamidoglykolsäure. Gegebenenfalls können auch ethylenisch ungesättigte Monomere copolymerisiert werden, die Abkömmlinge des Benzophenons oder Acetophenons sind und unter Einwirkung von elektromagnetischer Strahlung die innere Festigkeit von Verfilmungen wäßriger Polymerisatdispersionen erhöhen. Bezogen auf die Gesamtmenge der zu polymerisierenden Monomeren werden die vorgenannten, die innere Festigkeit erhöhenden, Monomeren meist in einer Menge von bis zu 10 Gew.-%, vorzugsweise bis zu 5 Gew.-%, mit einpolymerisiert.

Die Verfilmungen der dabei resultierenden wäßrigen Polymerisatdispersionen weisen in der Regel eine reduzierte Verschmutzungsneigung auf.

Als weitere Wirkmonomere können beispielsweise, bezogen auf die Gesamtmenge der zu polymerisierenden Monomeren, bis zu 5 Gew.-%, vorzugsweise bis zu 2 Gew.-%, ethylenisch ungesättigte Organozinnverbindungen copolymerisiert werden, wie sie in der DE-A 39 01 073 beschrieben sind. Die dabei resultierenden Verfilmungen sind biozid ausgerüstet und zeigen z. B. einen verminderten Bewuchs durch Algen.

Günstige Monomerenzusammensetzungen zur Herstellung von anspruchsgemäßen Polymerisaten P umfassen neben 0,5 bis 5 Gew.-% an Monomeren der allgemeinen Formel I und II im allgemeinen

- 70 bis 99,5 Gew.-% Ester der Acryl- und/oder Methacrylsäure mit 1 bis 12 C-Atome aufweisenden Alkanolen und/oder Styrol
  oder

- 70 bis 99,5 Gew.-% Styrol und/oder Butadien,
  oder

- 70 bis 99,5 Gew.-% Vinylchlorid und/oder Vinylidenchlorid,
  oder

- 40 bis 99,5 Gew.-% Vinylacetat, Vinylpropionat und/oder Ethylen.

Besonders relevant sind im Hinblick auf das erfindungsgemäße Verfahren zur Herstellung von Polymerisaten P Monomerenzusammensetzungen, die umfassen:

90 bis 99,5 Gew.-% an Estern der Acryl- und/oder Methacrylsäure mit 1 bis 12 C-Atome aufweisenden Alkanolen und/oder Styrol,

0,1 bis 5 Gew.-% wenigstens eines polaren Monomeren mit einer Wasserlöslichkeit von größer 50 g/Liter (gemessen bei 20 °C).

Ebenfalls relevant sind Polymerisate P enthaltend die Monomerzusammensetzung:

| | |
|---|---|
| 90 bis 99,5 Gew.-% | an Estern der Acryl- und/oder Methacrylsäure mit 1 bis 12 C-Atome aufweisenden Alkanolen und/oder Styrol, |
| 0,1 bis 5 Gew.-% | wenigstens eines Monomeren der allgemeinen Formel I und/oder II und |
| 0 bis 5 Gew.-% | eines oder mehrere Monomere aus der Gruppe umfassend 3 bis 6 C-Atome aufweisende $\alpha,\beta$ -monoethylenisch ungesättigte Carbonsäuren, deren Alkalimetallsalze, deren Ammoniumsalz und deren Amid; |

Besonders relevant sind im Hinblick auf das erfindungsgemäße Verfahren zur Herstellung von Polymerisaten P Monomerenzusammensetzungen, die umfassen:

| | |
|---|---|
| 90 bis 99,5 Gew.-% | an Estern der Acryl- und/oder Methacrylsäure mit 1 bis 12 C-Atome aufweisenden Alkanolen und/oder Styrol, |
| 0,1 bis 5 Gew.-% | wenigstens eines Monomeren der allgemeinen Formel I und/oder II und |

(fortgesetzt)

| | |
|---|---|
| 0 bis 5 Gew.-% | eines oder mehrere Monomere aus der Gruppe umfassend 3 bis 6 C-Atome aufweisende α,β -monoethylenisch ungesättigte Carbonsäuren, deren Alkalimetallsalze, deren Ammoniumsalz und deren Amid; |

oder

| | |
|---|---|
| 90 bis 99,5 Gew.-% | Styrol und/oder Butadien, |
| 0,1 bis 5 Gew.-% | wenigstens eines Monomeren der allgemeinen Formel I und/oder II und, |
| 0 bis 5 Gew.-% | eines oder mehrere Monomere aus der Gruppe umfassend 3 bis 6 C-Atome aufweisende α,β -monoethylenisch ungesättigte Carbonsäuren, deren Alkalimetallsalze, deren Ammoniumsalz und deren Amid; |
| oder | |
| 90 bis 99,5 Gew.-% | Vinylchlorid und/oder Vinylidenchlorid, |
| 0,1 bis 5 Gew.-% | wenigstens eines Monomeren der allgemeinen Formel I und/oder II und |
| 0 bis 5 Gew.-% | eines oder mehrere Monomere aus der Gruppe umfassend 3 bis 6 C-Atome aufweisende α,β -monoethylenisch ungesättigte Carbonsäuren, deren Alkalimetallsalze, deren Ammoniumsalz und deren Amid; |

oder

| | |
|---|---|
| 90 bis 99,5 Gew.-% | Vinylacetat, Vinylpropionat und/oder Ethylen, |
| 0,1 bis 5 Gew.-% | wenigstens eines Monomeren der allgemeinen Formel I und/oder II und |
| 0 bis 5 Gew.-% | eines oder mehrere Monomere aus der Gruppe umfassend 3 bis 6 C-Atome aufweisende α,β -monoethylenisch ungesättigte Carbonsäuren, deren Alkalimetallsalze, deren Ammoniumsalz und deren Amid. |

Als weitere günstige Monomerenzusammensetzung kommt für das Polymerisat P eine Monomerenzusammensetzung in Betracht, die umfasst

| | |
|---|---|
| 90 bis 99,5 Gew.-% | wenigstens eines Monomeren aus der Gruppe umfassend Ester der Acrylsäure mit 1 bis 8 C-Atome aufweisenden Alkanolen, Ester der Methacrylsäure mit 1 bis 8 C-Atome aufweisenden Alkanolen, Styrol, α-Methylstyrol, o-Chlorstyrol und Vinyltoluole, |
| 0,1 bis 5 Gew.-% | wenigstens eines Monomeren der allgemeinen Formel I und/oder II und |
| 0 bis 5 Gew.-% | eines oder mehrere Monomere aus der Gruppe umfassend Acrylsäure, Methacrylsäure, Itaconsäure, die Alkalimetallsalze dieser Säuren, die Ammoniumsalze dieser Säuren, Acrylamid und Methacrylamid. |

Unter diesen Monomerenzusammensetzungen sind diejenigen bevorzugt, die keine vinylaromatischen Monomeren umfassen.

Gemäß Ullmanns Encyclopädie der technischen Chemie, Bd. 19, 4. Auflage, Verlag Chemie, Weinheim (1980) S. 17/18, erfolgt aus einer wässrigen Polymerisatdispersion nur dann eine anwendungsgerechte Bildung eines Polymerfilms, wenn die sogenannte Mindestfilmbildetemperatur der wäßrigen Polymerisatdispersion unterhalb der Anwendungstemperatur liegt. Die Mindestfilmbildetemperatur einer wäßrigen Polymerisatdispersion läßt sich in dem Fachmann an sich bekannter Weise z. B. dadurch beeinflussen, dass man der wäßrigen Polymerisatdispersion sogenannte schwerflüchtige äußere Weichmacher wie z. B. Ester der Phthalsäure und/oder leichtflüchtige Filmbildehilfsmittel wie niedrig siedende organische Lösungsmittel zusetzt, wobei sich eine Kombination aus bei 25 °C in Wasser wenig löslichen

äußeren Weichmachern und bei 25 °C in Wasser gut löslichen Filmbildehilfsmitteln für die Filmbildung als besonders vorteilhaft erweist. Als relativ leichtflüchtige Filmbildehilfsmittel kommen u. a. in Betracht: Ethylenglykol, 1,2-Propandiol, Glycerin und andere aliphatische Polyalkohole, Ethylenglykolmonoethylether, Ethylenglykolmonobutylether, Ethylenglykolhexylether, Diethylenglykolmonomethylether, Diethylenglykolmonopropylether, Diethylenglykolmonobutylether, Dipropylenglykolmethylether, Dipropylenglykol-n-butylether, Propylenglykol-t-butylether, Tripropylenglykolmethylether und andere aliphatische Glykolether, Ethylenglykolmonoethyletheracetat, Diethylenglykolmonobutyletheracetat, Propylenglykolmonomethyletheracetat und andere Ester von aliphatischen Glykolethern, Adipinsäurediisobutylester, Bernsteinsäurediisobutylester, Glutarsäurediisobutylester, Maleinsäurediisobutylester und andere Diester aliphatischer Dicarbonsäuren und Testbenzin.

Als schwer flüchtige äußere Weichmacher kommen u. a. in Betracht: Dimethylphthalat, Dibutylphthalat, Dioctylphthalat und andere Ester der Phthalsäure, 2,2,2-Trimethyl-1,3-pentandiolmonoisobutyrat, propoxyliertes m-Kresol mit einem zahlenmittleren Propoxylierungsgrad von 6, propoxyliertes p-Kresol mit einem zahlenmittleren Propoxylierungsgrad von 6 sowie Gemische dieser beiden Oligo(propylenglykol)-Kresolether, Oligo(propylenglykol)-Kresolether mit einem zahlenmittleren Propoxylierungsgrad von 3, Oligo(propylenglykol)-Kresolether mit einem zahlenmittleren Propoxylierungsgrad von 12 sowie Oligo(propylenglykol)phenylether u. Oligo(propylenglykol)-alkylphenylether mit einem zahlenmittleren Propoxylierungsgrad von 3 bis 12, aromatische Glykolether, p-Toluolsulfonsäureethylester, Alkylester aromatischer Sulfonsäuren, Tributoxyethylphosphat, Tri-n-butylphosphat und andere Phosphorsäureester.

Selbstverständlich ist der Übergang von Filmbildehilfsmitteln zu äußeren Weichmachern fließend.

Bevorzugt wird jedoch das Prinzip der inneren Weichmachung angewendet (das selbstverständlich auch in Kombination mit äußerer Weichmachung angewendet werden kann). D. h. innerhalb der vorstehend aufgeführten Raster möglicher Monomerenzusammensetzungen wird letztere so gewählt, daß die statische Glasübergangstemperatur des Polymerisats P der geforderten Mindestfilmbildetemperatur im Wesentlichen entspricht. Unter statischer Glasübergangstemperatur Tg wird hier die midpoint temperature nach ASTM D 3418-82 verstanden, ermittelt durch Differentialthermoanalyse DSC (vgl. auch Ullmann's Encyclopedia of Industrial Chemistry, VCH Weinheim (1992), S. 169 u. Zosel, Farbe und Lack 82 (1976), S. 125-134).

Nach Fox (T.G. Fox, Bull. Am. Phys.Soc. (Ser.II)1, 123[1956]) und gemäß Ullmanns Encyclopädie der technischen Chemie, Bd. 19, 4. Auflage, Verlag Chemie, Weinheim (1980), S. 18, gilt für die statische Glasübergangstemperatur von höchstens schwach vernetzten Mischpolymerisaten in guter Näherung:

$$\frac{1}{T_g} = \frac{X^1}{T_g^1} + \frac{X^2}{T_g^2} + \dots \frac{X^n}{T_g^n}$$

wobei $X^1$, $X^2$, ..., $X^n$ die Massenbrüche der Monomeren 1, 2, ..., n und $Tg^1$, $Tg^2$, ..., $Tg^n$ die statischen Glasübergangstemperaturen der jeweils nur aus einem der Monomeren 1, 2, ..., n aufgebauten Polymeren in Grad Kelvin bedeuten. Die statischen Glasübergangstemperaturen dieser Homopolymerisate der meisten ethylenisch ungesättigten Monomeren sind bekannt (bzw. können in einfacher an sich bekannter Weise experimentell ermittelt werden) und z.B. in J. Brandrup, E.H. Immergut, Polymer Handbook 1st Ed., J. Wiley, New York 1966, 2nd Ed., J. Wiley, New York 1975, und 3rd Ed., J. Wiley, New York, 1989, sowie in Ullmann's Encyclopedia of Industrial Chemistry, VCH Weinheim (1992), S. 169 aufgeführt. Über die statische Glasübergangstemperatur läßt sich in dem Fachmann an sich bekannter Weise auch die Frost-Tau-Beständigkeit der erfindungsgemäßen konservierenden Beschichtungen beeinflussen.

Vorzugsweise beträgt die statische Glasübergangstemperatur der Verfilmungen der wäßrigen Dispersionen der anspruchsgemäß zu verwendenden Polymerisate P -10 bis +60 °C, besonders bevorzugt -5 bis +40 °C und ganz besonders bevorzugt 0 bis 30 °C. In entsprechender Weise umfasst die Monomerenzusammensetzung des anspruchsgemäß zu verwendenden Polymerisats P mit Vorteil

| | |
|---|---|
| 40 bis 60 Gew.-% | Methylmethacrylat |
| 40 bis 60 Gew.-% | n-Butylacrylat und/oder 2-Ethylhexylacrylat (Monomere b), |
| 0,2 bis 5 Gew.-% | wenigstens eines Monomeren der allgemeinen Formel I und |
| 0,2 bis 5 Gew.-% | wenigstens eines Monomeren II aus der Gruppe umfassend |

Acrylsäure, Methacrylsäure, Itaconsäure, die Alkalimetallsalze dieser Säuren, die Ammoniumsalze dieser Säuren, Acrylamid und Methacrylamid.

Zweckmäßigerweise erfolgt die Herstellung des Polymerisats P aus den wenigstens eine monoethylenisch ungesättigte Gruppe aufweisenden Monomeren nach der Methode der radikalischen wäßrigen Emulsionspolymerisation, d.h. in der Regel im Beisein von radikalischen Polymerisatinitiatoren sowie von Dispergiermitteln unmittelbar in im

wäßrigen Medium disperser Verteilung befindlich (obgleich es sich bei der erfindungsgemäß mitzuverwendenden wäßrigen Dispersion des Polymerisats P auch um eine Sekundärdispersion handeln kann; die Herstellung von Sekundärdispersionen beschreibt z.B. die EP-A 320 865).

Diese Herstellungsweise ist vielfach vorbeschrieben und dem Fachmann daher hinreichend bekannt (vgl. z.B. Encyclopedia of Polymer Science und Engineering, Vol. 8, S. 659 ff (1987); D.C. Blackley, in High Polymer Latices, Vol. 1, S. 35 ff (1966); H. Warson, The Applications of Synthetic Resin Emulsions, Seite 246 ff, Kapitel 5 (1972); D. Diederich, Chemie in unserer Zeit 24, S. 135 bis 142 (1990); Emulsion Polymerization, Interscience Publishers, New York (1965); DE-A 40 03 422 und Dispersionen synthetischer Hochpolymerer, F. Hölscher, Springer-Verlag, Berlin (1969)).

Die Größe der in der wäßrigen Polymerisatdispersion dispergierten Polymerisatteilchen, d.h. ihr Durchmesser, wird in dem Fachmann an sich bekannter Weise insbesondere durch die Art und Menge an mitverwendetem Dispergiermittel bestimmt. In der Regel geht mit zunehmender Dispergiermittelmenge ein abnehmender Polymerisatteilchendurchmesser einher. Üblicherweise liegen die Durchmesser der dispergierten Polymerisatteilchen im Bereich von 10 bis 5000 nm, häufig hauptsächlich im Bereich von 10 bis 1000 nm.

Mit Vorteil beträgt der zahlenmittlere Durchmesser der im Rahmen des erfindungsgemäßen Verfahrens mit zu verwendenden wäßrigen Polymerisatdispersion 50 bis 400 nm, vorzugsweise 80 bis 300 nm und besonders bevorzugt 100 bis 250 nm.

Zur Reduktion der Viskosität einer Polymerisatdispersion ist es von Vorteil, wenn die Häufigkeitsverteilung der Polymerisatteilchendurchmesser multimodal ist, d.h. sie weist mehr als ein Maximum auf. Bevorzugt beträgt die Anzahl der Maxima 2, 3 oder 4 (ermittelt mittels kapillarhydrodynamischer Fraktionierung (CHDF) gemäß J. of Colloid and Interface Science, Vol. 135, S. 165-177 (1990)).

Als Dispergiermittel kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 2000, häufig unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Alkohole (EO-Grad: 3 bis 100, Alkylrest: $C_8$ bis $C_{18}$), sowie Alkali- und Ammoniumsalze von Alkylsulfaten (Alkylrest: $C_8$ bis $C_{16}$), von Schwefelsäurehalbestern oder einfachen Phosphorsäureestern ethoxylierter Alkohole (EO-Grad: 1 bis 70, Alkylrest: $C_{12}$ bis $C_{18}$) und ethoxylierter Alkylphenole (EO-Grad: 3 bis 100, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel II

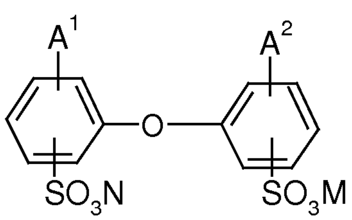
(II),

worin $A^1$ und $A^2$ Wasserstoff oder $C_4$- bis $C_{24}$-Alkyl bedeuten und nicht gleichzeitig Wasserstoff sind, und N und M Alkalimetallionen und/oder Ammoniumionen sein können, erwiesen. In der Formel II bedeuten $A^1$ und $A^2$ bevorzugt lineare oder verzweigte Alkylreste mit 6 bis 18 C-Atomen oder Wasserstoff, und insbesondere mit 6,12 und 16 C-Atomen, wobei $A^1$ und $A^2$ nicht beide gleichzeitig Wasserstoff sind. N und M sind bevorzugt Natrium, Kalium oder Ammoniumionen, wobei Natrium besonders bevorzugt ist. Besonders vorteilhaft sind Verbindungen II in denen N und M Natrium, $A^1$ ein verzweigter Alkylrest mit 12 C-Atomen und $A^2$ Wasserstoff oder $A^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company), Dowfax® 3B2 und Dowfax® 8390. Vorzugsweise werden die Verbindungen

II im erfindungsgemäßen Verfahren für sich und besonders bevorzugt im Gemisch mit ethoxylierten Fettalkoholen und/oder Oxoalkoholen (EO-Grad: 3 bis 50, Alkylrest: $C_8$- bis $C_{36}$) als Dispergiermittel eingesetzt. Die Verbindungen II sind allgemein bekannt, z. B. aus der US-A 4,269,749, und im Handel erhältlich.

Neben den genannten anionischen Emulgatoren können auch nichtionische Emulgatoren verwendet werden. Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C4-C9), Ethoxylate langkettiger Alkohole (EO-Grad: 3 bis 50, Alkylrest: C8-C36), sowie Polyethylenoxid/Polypropylenoxid-Blockcopolymere. Bevorzugt werden Ethoxylate langkettiger Alkanole (Alkylrest: C10-C22, mittlerer Ethoxylierungsgrad: 3 bis 50) und darunter besonders bevorzugt solche auf Basis von Oxoalkoholen und nativen Alkoholen mit einem linearen oder verzweigten C12-C18- Alkylrest und einem Ethoxilierungsgrad von 8 bis 50. Bevorzugt werden anionische Emulgatoren, insbesondere Emulgatoren der allgemeinen Formel II, oder Kombinationen aus wenigstens einem anionischen und einem nichtionischen Emulgator eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Neben der saatfreien Herstellungsweise kann zur Einstellung einer definierten Polymerteilchengröße die Emulsionspolymerisation nach dem Saatlatex-Verfahren oder in Gegenwart von in-situ hergestelltem Saatlatex erfolgen.

Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In einer Ausführungsform der vorliegenden Erfindung wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 400 nm, vorzugsweise 20 bis 120 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere wie, z. B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Polymerisationsdruck und Polymerisationstemperatur sind von eher untergeordneter Bedeutung Im Allgemeinen arbeitet man bei Temperaturen zwischen Raumtemperatur und 120 °C, vorzugsweise bei Temperaturen von 40 bis 110 °C, bevorzugt zwischen 50 und 100 °C. Die Anwendung von erhöhtem oder vermindertem Druck ist möglich, so dass die Polymerisationstemperatur auch 100 °C überschreiten und bis zu 130 °C betragen kann. Vorzugsweise werden leichtflüchtige Monomere wie Ethylen, Butadien oder Vinylchlorid unter erhöhtem Druck polymerisiert.

Im Anschluss an die eigentliche Polymerisationsreaktion ist es gegebenenfalls erforderlich, die anspruchsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 51 8 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Die erfindungsgemäß zur Anwendung kommenden Zubereitungen können beliebig ausgestaltet werden, d. h. in Form von Lösungen oder Dispersionen der Copolymere P. Als Lösungs- bzw. Dispergiermedium werden bevorzugt wässrige Lösungsmittel, d. h. Wasser oder Mischungen aus Wasser und einem mit Wasser mischbaren organischen Lösungsmittel, z. B. einem C1-C4-Alkanol, wie Methanol, Ethanol, n- oder isoPropanol, n-, iso-, oder tert.-Butanol, Glykol, Propylenglykol, Butylenglykol, Glycerin, Diethylenglykol, Triethylenglykol, Tetrahydrofuran o. ä. verwendet.

Bevorzugt kommen die anspruchsgemäßen Copolymere P in Form wässriger Zubereitungen, die nicht mehr als 50 Gew.-%, insbesondere nicht mehr als 20 Gew.-% und speziell nicht mehr als 10 Gew.-%, bezogen auf das Gesamtgewicht der Zubereitung, mit Wasser mischbare Lösungsmittel enthalten, zur Anwendung. Ganz besonders bevorzugt enthalten die erfindungsgemäßen Zubereitungen außer Wasser und abgesehen von üblichen Frostschutzmitteln und Filmbildehilfsmitteln keine organischen Lösungsmittel. In diesen Zubereitungen liegen die Copolymere P in der Regel in Form wässriger Dispersionen vor.

Die Lösungen bzw. Dispersionen der Copolymere P können erfindungsgemäß als solche verwendet werden. Die Zubereitungen enthalten jedoch in der Regel 0,1 bis 30 Gew.-% übliche Hilfsmittel. Ferner enthalten die wässrigen Zubereitungen, sofern die Herstellung der Copolymere P durch radikalische, wässrige Emulsionspolymerisation erfolgt

ist, auch die für diesen Zweck eingesetzten, grenzflächenaktiven Substanzen, wie Emulgatoren und/oder Schutzkolloide.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel. Geeignete Filmbildehilfsmittel sind beispielsweise Ethylenglykol, Propylenglykol, Butylenglykol, Hexylenglykol, Diethylenglykol, Dipropylenglykol, Dibutylenglykol, deren Halbether mit C1-C4-Alkanolen, z. B. Diethylenglykolmonoethylether, -monobutylether, Propylenglykolmonophenylether, Propylenglykolmonopropylether, -monobutylether, Dipropylenglykolmonopropylether, -monobutylether, deren Ether-Acetate, wie Diethylenglykolmonoethyletheracetat und -monobutyletheracetat, Propylenglykolmonopropyletheracetat und -monobutyletheracetat, Dipropylenglykol-n-butyletheracetat, ferner Alkylester aliphatischer Mono- und Dicarbonsäuren, z. B. Texanol® der Eastman Kodak, oder deren technische Gemische davon, z. B. Lusolvan® FBH der BASF AG (Di-n-butylestergemische der Bernstein-, Glutar- und Adipinsäure). Als Weichmacher kommen alle üblichen, für Dispersionen geeigneten Weichmacher, beispielsweise Oligo(propylenglykol)alkylphenylether, wie sie z. B. als Plastilit® 3060 der BASF AG im Handel erhältlich sind, in Frage.

Ferner können die erfindungsgemäß zur Anwendung kommenden wässrigen Zubereitungen auch anorganische Füllstoffe und/oder Pigmente enthalten. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken können die Zubereitungen auch farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten. Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc.

Ferner können die erfindungsgemäß zur Anwendung kommenden wässrigen Zubereitungen auch vernetzende Zusätze enthalten. Derartige Zusätze können sein: aromatische Ketone, z. B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind z. B. aus der DE-A 38 27 975 und der EP-A 417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A 39 01 073, wenn das Copolymer P Carbonylgruppen enthaltende Monomere einpolymerisiert enthält.

Unter den erfindungsgemäßen Beschichtungsmitteln versteht man beispielsweise Klarlacke, Anstrichmittel wie Farben, Putze oder Coatings.

In einer bevorzugten Ausführungsform der vorliegenden Erfindung werden die wässrigen Zubereitungen in Form eines Klarlacks eingesetzt. Sie enthalten dann in der Regel, bezogen auf ihr Gesamtgewicht, 10 bis 60 Gew.-%, vorzugsweise 40 bis 55 Gew.-% wenigstens eines Copolymers P und 0,1 bis 30 Gew.-%, vorzugsweise 0,5 bis 10 Gew.-% übliche Hilfsmittel, insbesondere Entschäumer und/oder Filmbildehilfsmittel.

In einer anderen Ausführungsform der vorliegenden Erfindung werden die wässrigen Zubereitungen in Form pigment- und/oder füllstoffhaltiger Zubereitungen eingesetzt. In diesem Fall liegt der Gesamtgehalt an Copolymer P in der wässrigen Zubereitung im Bereich von 10 bis 60 Gew.-%, vorzugsweise im Bereich von 20 bis 40 Gew.-%, der Gehalt an Hilfsmitteln im Bereich von 0,1 bis 30 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Copolymer P in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten.

Die erfindungsgemäßen Klarlacke und pigmentierten Farben können weitere übliche Hilfsmittel enthalten, wie z. B. Netzmittel, Topf- und Filmkonservierungsmittel, Verdicker, Entschäumer, Verlaufsförderer und Gefrierschutzmittel in den an sich üblichen Mengen.

In der Regel beträgt die Menge an eingesetztem Dispergiermittel 0,5 bis 6, vorzugsweise 1 bis 3 Gew.-% bezogen auf die Menge der radikalisch zu polymerisierenden Monomeren.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z. B. Alkalimetallperoxodisulfate, als auch um Azoverbindungen handeln. Häufig werden kombinierte Systeme, die aus wenigstens einem organischen Reduktionsmittel und wenigstens einem Peroxid und/oder Hydroperoxid zusammengesetzt sind, z. B. tert.-Butylhydroperoxid und das Natriummetallsalz der Hydroxymethansulfinsäure oder Wasserstoffperoxid und Ascorbinsäure, und vielfach kombinierte Systeme, die darüber hinaus eine geringe Menge einer im Polymerisationsmedium löslichen Metallverbindung, deren metallische Komponente in mehreren Wertigkeitsstufen auftreten kann, enthalten, z. B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/oder Ammoniumperoxidisulfat angewendet werden. Anstelle eines wasserlöslichen Eisen(II)-salzes wird häufig eine Kombination aus wasserlöslichen Fe/V-Salzen benutzt. Vorzugsweise beträgt die Menge der eingesetzten radikalischen Initiatorsysteme, bezogen auf

die Gesamtmenge der zu polymerisierenden Monomeren, 0,1 bis 2 Gew.-%.

Zur Beeinflussung des Molekulargewichts können selbstverständlich das Molekulargewicht regelnde Verbindungen wie Mercaptane, z. B. Mercaptoethanol oder Thioglykolsäureester, im Rahmen der Polymerisation mitverwendet werden.

Das Polymerisationsmedium kann sowohl nur aus Wasser, als auch aus Mischungen von Wasser und damit mischbaren Flüssigkeiten wie Methanol bestehen. Vorzugsweise wird nur Wasser verwendet.

Unter der Gradientenfahrweise im Sinne der vorliegenden Erfindung versteht man eine Emulsionspolymerisation, bei der ein oder mehrere Monomere mit nicht konstanter Geschwindigkeit zudosiert werden. Aus Gründen der einfachen apparativen Handhabbarkeit wurden bei den hier beschriebenen Experimenten die Geschwindigkeiten nicht kontinuierlich (= "echter Gradient"), sondern stufenweise (= interpolierter Gradient) variiert (im mathematischen Sinne stellt somit die Auftragung der Dosiergeschwindigkeit gegen die Zeit eine nichtstetige Funktion dar). Kontinuierliche Geschwindigkeitsänderungen sind prinzipiell aber auch ohne großen Mehraufwand durchführbar.

Vorzugsweise erfolgt die Durchführung der radikalischen wäßrigen Emulsionspolymerisation zur Herstellung der Polymerisate P nach dem Zulaufverfahren, d.h. der überwiegende Teil der Monomeren wird dem Polymerisationsgefäß nach Maßgabe des erfolgten Polymerisationsumsatzes kontinuierlich zugeführt. Vorzugsweise erfolgt die Zufuhr der Monomeren dabei als Emulsionszufuhr. D.h. aus der Gesamtmenge der zu polymerisierenden Monomeren, einem Teil des Wassers sowie einem Teil der mitzuverwendenden Emulgatoren wird eine wäßrige Emulsion gebildet, die dem Polymerisationsgefäß nach Maßgabe des Monomerenverbrauchs kontinuierlich zugeführt wird (Emulsionszulaufverfahren).

Zusätzlich kann parallel dazu ein zweites Zulaufgefäß verwendet werden. Das zweite Zulaufgefäß kann einen Teil der für die Emulsionspolymerisation verwendeten Monomere in emulgierter, in reiner oder in gelöster Form enthalten. Falls in diesem zweiten Zulaufgefäß eine Emulsion verwendet wird, können dort gegebenenfalls Emulgatoren verwendet werden. Geeignete Emulgier- bzw. Lösungsmittel entsprechen denjenigen des ersten Zulaufs. Bevorzugt wird Wasser verwendet. Bevorzugt enthält der zweite Zulauf mindestens ein hydrophiles Monomeres in emulgierter, gelöster oder reiner Form. Besonders bevorzugt enthält es mindestens ein hydrophiles Monomeres in gelöster Form.

Der Inhalt des zweiten Zulaufgefäßes kann unabhängig vom ersteren dem Reaktorgefäß zugeführt werden. Dies ermöglicht eine Dosierung der im zweiten Zulauf enthaltenen Bestandteile mit unterschiedlichen Dosierraten relativ zum ersten Zulauf. Prinzipiell kann die Dosiergeschwindigkeit beider Zuläufe für jeden Zeitpunkt der Polymerisation unabhängig voneinander frei gewählt werden. Dies impliziert auch Zulaufunterbrechungen. Bevorzugt wird der Inhalt des ersten Zulaufs linear, d. h. mit konstanter Dosierrate über die gewählte Polymerisationsdauer dem Reaktorgefäß zugeführt. Bevorzugt wird der Inhalt des zweiten Zulaufs innerhalb der gewählten Polymerisationsdauer nichtlinear, d. h. mit nicht-konstanter Dosierrate dem Reaktor zugeführt. Dies impliziert jedes denkbare Dosiergeschwindigkeitsprofil, inklusive Zulaufunterbrechungen, echte Zulaufgradienten (= stetige Änderung der Dosiergeschwindigkeit), Stufengradienten (= sprunghafte Änderung der Dosiergeschwindigkeit), Verlagerung der Dosierung in bestimmte Zeitbereiche der Polymerisation, etc. Als Alternative zum zweiten separaten Zulauf können echte Gradienten auch mit Techniken wie "Power-Feeding" realisiert werden. Hierzu werden die Bestandteile, die mit nicht-konstanter Rate dosiert werden sollen, dem eigentlichen Zulauf mit konstanter oder variabler Rate zudosiert, während dieser eigentliche Zulauf gleichzeitig mit konstanter oder variabler Rate zum Reaktionsgeschehen dosiert wird. Durch diese Anordnung ändert sich die Zusammensetzung des Zulaufs in Abhängigkeit von der Zeit, was einer Dosierung der gewünschten Bestandteile mit nichtkonstanter Rate entspricht. Bestimmte Dosierungsprofile, wie zum Beispiel Unterbrechungen sind mit dieser apparativen Anordnung allerdings nicht möglich. Daher ist im Rahmen der Erfindung aus Flexibilitätsgründen das Verfahren mit separatem und separat steuerbarem zweiten Zulauf bevorzugt.

Die Art und Weise, in der das radikalische Initiatorsystem im Verlauf der erfindungsgemäßen radikalischen wäßrigen Emulsionspolymerisation dem Polymerisationsgefäß zugegeben wird, ist hinsichtlich des Erfolgs des erfindungsgemäßen Verfahrens eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im Einzelnen hängt dies in an sich dem Durchschnittsfachmann bekannter Weise sowohl von der chemischen Natur des Initiatorsystems als auch von der Polymerisationstemperatur ab.

Bevorzugt wird das Emulsionszulaufverfahren wie folgt durchgeführt. In das Polymerisationsgefäß werden 10 bis 50 Gew.-% des insgesamt zu verwendenden Wassers sowie 0 bis 50 Gew.-% des insgesamt zu verwendenden Dispergiermittels vorgelegt und auf die gewünschte Polymerisationstemperatur erwärmt. Es kann auch ein Teil der Monomere vorgelegt werden Aus der Gesamtmenge der mit einem Geschwindigkeitsprofil A zu polymerisierenden Monomeren, der Restmenge des Dispergiermittels und 10 bis 50 Gew.-% des insgesamt zu verwendenden Wassers wird eine Monomerenemulsion erzeugt, die einen Zulauf 1 bildet. Die Gesamtmenge des zu verwendenden Polymerisationsinitiators wird in 1 bis 20 Gew.-% des insgesamt zu verwendenden Wassers gelöst. Diese Lösung bildet einen Zulauf 2. Zusätzlich bilden diejenigen Monomere in reiner, gelöster oder in Wasser emulgierter Form einen separaten Zulauf 3, die mit einem Geschwindigkeitsprofil B, welches unabhängig vom Geschwindigkeitsprofil A ist, dosiert werden

sollen. Anschließend fügt man der auf die Polymerisationstemperatur erwärmten Vorlage 1 bis 10 Gew.-% des Zulauf 1 und/oder 1 bis 10 Gew.% des Zulaufs 3 sowie 1 bis 10 Gew.-% des Zulauf 2 zu und polymerisiert das dabei resultierende Gemisch bis zu einem Umsatz der enthaltenen Monomeren von wenigstens 80 mol-%, bevorzugt von wenigstens 90 mol-%. Anschließend führt man die Restmengen der Zuläufe 1, 2 und 3 unter Aufrechterhalten der Polymerisation (nach Maßgabe des Polymerisationsumsatzes) räumlich getrennt zu. Bevorzugt erfolgt die Zudosierung der Zuläufe 1 und 2 kontinuierlich, d.h. mit konstanter Dosiergeschwindigkeit, wohingegen die Dosierung des Zulaufs 3 mit nichtkonstanter Geschwindigkeit erfolgt. Gegebenenfalls wird anschließend zur Vervollständigung des Polymerisationsumsatzes noch nachpolymerisiert.

Ganz besonders bevorzugt wird das Emulsionspolymerisationsverfahren so durchgeführt, dass die Vorlage zusätzlich wenigstens eine Teilmenge der Gesamtmenge der insgesamt einzupolymerisierenden Monomeren der allgemeinen Formel I und/oder II umfasst und nur noch die Restmenge der Gesamtmenge der Monomeren der allgemeinen Formel I und/oder II am Emulsionszulauf 1 und/oder am separaten Zulauf 3 beteiligt ist.

Mit Vorteil beträgt diese vorgelegte Menge der Monomeren der allgemeinen Formel I 5 bis 100 Gew.-%, vorzugsweise 20 bis 90 Gew.-% und besonders bevorzugt 40 bis 80 Gew.-% der Gesamtmenge der insgesamt einzupolymerisierenden Monomeren der allgemeinen Formel I. Die im Rahmen dieser Verfahrensweise resultierenden erfindungsgemäß zu verwendenden wäßrigen Polymerisatdispersionen zeichnen sich durch eine erhöhte Stabilität der dispersen Verteilung der Polymerisatteilchen aus.

Ferner läßt sich über die einpolymerisierte Menge sowie über die Verteilung der Monomeren der allgemeinen Formel I zwischen Vorlage und Zulauf der Fließwiderstand der resultierenden wäßrigen Polymerisatdispersion in einfacher Weise in einem weiten Rahmen gezielt beeinflussen (ein geringer vorgelegter Mengenanteil bedingt einen geringeren Fließwiderstand, ein erhöhter vorgelegter Mengenanteil bedingt entsprechend einen erhöhten Fließwiderstand). Bei einem Feststoffvolumengehalt der resultierenden wäßrigen Polymerisatdispersion von 50 Vol.-% können beispielsweise dynamische Viskositäten von 20 bis 1000 mPas (gemessen bei einer Schergeschwindigkeit von 250 $sec^{-1}$ sowie 25°C und 1 atm nach DIN 53019) gezielt eingestellt werden.

Bevorzugter Polymerisationsinitiator ist beim Zulaufverfahren Natriumperoxodisulfat und die Polymerisationstemperatur beträgt vorzugsweise 75 bis 95°C. In der Regel erfolgt die Polymerisation unter Inertgasatmosphäre.

Bevorzugt erfolgt die Herstellung des erfindungsgemäßen Polymerisats P nach der Methode der radikalischen wäßrigen Emulsionspolymerisation bei einem pH-Wert des wäßrigen Dispergiermediums zwischen 1,5 und 9. Durch Zusatz von Alkalihydroxid und/oder Ammoniak am oder nach Ende der Polymerisation wird anschließend ein pH-Wert des wäßrigen Dispergiermediums von 6 bis 10, bevorzugt von 7 bis 9 eingestellt. Der solchermaßen erhöhte pH-Wert des wäßrigen Dispergiermediums ergibt üblicherweise eine bessere Lagerstabilität der wäßrigen Polymerisatdispersion und eignet sich für die erfindungsgemäße Konservierung in besonderer Weise. Der Feststoffgehalt der im Rahmen des erfindungsgemäßen Verfahrens anzuwendenden wäßrigen Polymerisatdispersionen liegt üblicherweise bei 20 bis 70 Gew.-%, vorzugsweise zwischen 40 und 60 Gew.-%.

Für die unterschiedlichen erfindungsgemäßen Anwendungen werden die folgenden Verfahrensvarianten und Verfahrensparameter bevorzugt:

Bitumenbeschichtungen
Günstiges Dosierungsprofil: abfallende Gradienten, d.h. mit über den Polymerisationsverlauf abnehmende Dosiergeschwindigkeit
Bevorzugter Feststoffgehalt der Bindemittel: 40 - 50%
Bevorzugter pH-Wert: 6.5 - 8
Bevorzugter Teilchengröße: 70-150 nm (HPPS)
Bevorzugte Glastemperatur der Bindemittel: 10 bis 30 °C
Bindemittel für Buntsteinputze
Günstiges Dosierungsprofil: aufsteigende Gradienten, d.h. mit über den Polymerisationsverlauf zunehmender Dosiergeschwindigkeit
Bevorzugter Feststoffgehalt der Bindemittel: 45 - 55%
Bevorzugter pH-Wert: 6.5 - 8
Bevorzugter Teilchengröße: 80 - 200 nm (HPPS)
Bevorzugte Glastemperatur der Bindemittel: 0 bis 25 °C

Die wäßrige Dispersion des Polymerisats P kann im Rahmen des erfindungsgemäßen Verfahrens sowohl für sich, als auch mit Zusätzen versehen zur Konservierung eines mineralischen Formkörpers eingesetzt werden. Solche Zusätze können sein: ein aromatisches Keton wie Benzophenon gemäß der DE-A 38 27 975 als Photoinitiator zum Zweck einer Vernetzung unter Einwirkung elektromagnetischer Strahlung, oder ein wasserlösliches Dihydrazid, gemäß der DE-A 39 01 073, wenn das Polymerisat P Carbonylgruppen aufweisende Monomere einpolymerisiert enthält.

Besonders häufig wird die wäßrige Dispersion des Polymerisats P in pigmentierter Form zur Konservierung

angewendet. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken können die Zubereitungen auch farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten.

Ferner kommen als Pigmente (vielfach auch als Füllstoffe bezeichnet) z.B. Bariumsulfat, Talkum, Glimmer, Calciumcarbonat, Dolomit, Quarzmehl und deren Gemische in Betracht. Pigmente können der wäßrigen Dispersion des Polymerisats P bis knapp unter die kritische Pigmentvolumenkonzentration zugesetzt werden. Vorzugsweise beträgt ihr Volumenanteil, bezogen auf die gesamte erfindungsgemäß anzuwendende Zusammensetzung, 15 bis 45 Vol.-%. Weiterhin kann die wäßrige Dispersion des Polymerisats P für das erfindungsgemäße Verfahren andere Hilfsmittel wie z.B. Netzmittel, Fungizide, Entschäumer, Verdickungsmittel, Gefrierschutzmittel und Verlaufsförderer in den an sich üblichen Mengen zugesetzt enthalten.

Üblicherweise beträgt die Auftragsmenge der zur Konservierung aufzubringenden wäßrigen Polymerisatzubereitung 100 bis 700 g/m$^2$ (naß gerechnet). Der Auftrag kann in an sich bekannter Weise durch Spritzen, Spachteln, Rakeln, Rollen oder Gießen erfolgen. Wesentlich ist, dass das erfindungsgemäße Verfahren sowohl bei bereits erhärteten als auch bei gerade frisch zubereiteten ("grünen") mineralischen Formkörpern angewendet werden kann. Es eignet sich insbesondere zur Konservierung von mineralischen Formkörpern, die Zement als mineralisches Bindemittel enthalten (sogenannte Betonsteine). In besonders vorteilhafter Weise verhindert es Ausblühungen auf Betondachsteinen. Letztere stellt man aus Zementmörteln her, deren Konsistenz die endgültige Formgebung ermöglicht. Ihre Erhärtung erfolgt meist bei Temperaturen zwischen 40 und 80°C. Die Betondachsteine werden nach der Formgebung (z. B. mittels Extrusion), aber in der Regel vor der Erhärtung, oberflächlich mit einer erfindungsgemäß anzuwendenden wäßrigen Zusammensetzung beschichtet und dann für 6 bis 12 h in Härtekammern, in denen üblicherweise die oben genannten Temperaturen herrschen, gelagert. In dieser Zeit härten sie aus und zugleich verfilmt die Beschichtungsmasse zu einem konservierenden Film. Mitunter wird ein weiterer Auftrag mit Beschichtungsmasse nach der Aushärtung mit anschließender Trocknung vorgenommen.

Beispiele

Vergleichsbeispiele

Vergleichsbeispiel 1

In einem Polymerisationsgefäß legte man 400 g entionisiertes Wasser, 1,4 g Itaconsäure und 6,22 g Emulgatorlösung 1 vor und erwärmte auf 85 °C. In einem Zulaufgefäß 1 stellte man eine Emulsion aus

| | |
|---|---|
| 158 g | entionisiertem Wasser |
| 9 g | Emulgatorlösung 1 |
| 37 g | Emulgatorlösung 2 |
| 413 g | Methylmethacrylat |
| 287 g | n-Butylacrylat |
| 70 g | 20 gew.-%ige Lsg. von IS |
| 7 g | 50 gew.-%ige Lsg. von Acrylamid in Wasser |

her. In einem zweiten Zulaufgefäß 2 stellte man eine Lösung von 1,4 g Natriumperoxodisulfat in 75 g Wasser her. Anschließend gab man unter Beibehaltung der 85 °C nacheinander in einer Portion 49 g von Zulauf 1 und 7,6 g von Zulauf 2 in die Vorlage und ließ 30 min reagieren.

Anschließend gab man, über räumlich getrennte Zuläufe zeitgleich beginnend, die Restmengen von Zulauf 1 innerhalb von 3 h und von Zulauf 2 innerhalb von 3,5 h unter Beibehaltung der 85 °C in das Polymerisationsgefäß. Nach Beendigung von Zulauf 2 ließ man 1 h nachpolymerisieren, kühlte auf 25 °C ab und neutralisierte mit Natronlauge (pH = ca. 8).

Der Feststoffgehalt der Dispersionen lag bei etwa 49%.

Emulgatorlösung 1:

45 gew.-%ige wässrige Lösung einer als Dowfax® 2A1 (Dow Chemical) im Handel üblichen Wirksubstanz (Gemisch von Mono- und Didodecylbenzylsulfonsäure-Natriumsalz) Emulgatorlösung 2:

15 gew.-%ige wässrige Lösung des Natriumsalzes eines $C_{12}$-Alkylsulfats

Vergleichsbeispiel 2

wie Vergleichsbeispiel 1 aber im Zulauf 1 zusätzlich

| | |
|---|---|
| 7,5 g | 50 Gew.-%ige Lsg. des Natriumsalzes von 2-Acrylamidopropansulfonsäure |

Vergleichsbeispiel 3

In einem mit Dosiereinrichtung und Temperaturregelung ausgerüstetem Polymerisationsgefäß wurden vorgelegt:

| | | |
|---|---|---|
| Vorlage: | 305,1 g | Wasser |
| | 19,7 g | 20% wäßr. Lsg. von Dodecylbenzylsulfonsäure-Natriumsalz |
| | 38,6 g | Zulauf 1 |
| | 16,6 g | Zulauf 2 |
| | 5,9 g | Natriumperoxodisulfat (7%) |

und unter Rühren (150 Upm) auf 90 °C erhitzt. Anschließend wurde, unter Aufrechterhaltung dieser Temperatur die Teilmengen des Zulaufs 1 in 2 min. und des Zulaufs 2 in 1 min. zugegeben und 15 min. gerührt. Anschließend wurden Zulauf 1 und 2 in 3 h zudosiert.

| | | |
|---|---|---|
| Zulauf 1: | 557,7 g | Wasser |
| | 19,7 g | 20% wäßr. Lsg. von $C_{16-18}$-Fettalkoholpolyethoxylat |
| | 13,1 g | 45% wäßr. Lsg. von Dodecyldiphenylether-disulfonsäure Natriumsalz |
| | 1,2 g | Ammoniak (25%) |
| | 15 g | Acrylsäure |
| | 25 g | Acrylamid (50%) |
| | 477,7 g | Methylmethacrylat |
| | 479,5 g | n-Butylacrylat |

| | | |
|---|---|---|
| Zulauf 2: | 11,0 g | Natriumperoxodisulfat (7%) |

Zulauf 1 wurde mit 21,6 g Wasser gespült. Es wurde 15 min nachgerührt, in 15 min 3,5 g Ammoniak (25%) in 16,7 g Wasser sowie 8,6 g Spülwasser zugegeben, 5 min. gerührt und innerhalb von 10 min. von 90 °C auf 80 °C abgekühlt. In 1 h wurden 5,9 g *tert*-Butylhydroperoxid (10%) und 7,5 g Natriumacetondisulfit (13,1%) mit 2,2 g Wasser und 10,8 g Spülwasser zudosiert. Nach Abkühlen und Drehzahlreduzierung wurden 1,6 g Ammoniak (25%) zugegeben.

Beispiel 1

Wie Vergleichsbeispiel 2 aber Dosierung der Itaconsäure über einen separaten Zulauf 3, wobei Zulauf 1 und 2 in 3 h zudosiert wurden und nach 1,5 h wurde Zulauf 3 in 1,5 h zudosiert.

Beispiel 2

wie Beispiel 1 aber Dosierung Zulauf 3 mit nicht konstanter Rate (steigende Dosiergeschwindigkeit):

| Dosiergeschwindigkeit [g/h] | Dauer [min.] |
|---|---|
| 38,4 | 22 |
| 41,4 | 22 |
| 44,4 | 22 |
| 47,4 | 22 |

(fortgesetzt)

| Dosiergeschwindigkeit [g/h] | Dauer [min.] |
|---|---|
| 50,4 | 22 |
| 53,4 | 22 |
| 56,4 | 22 |
| 60,0 | 26 |

Beispiel 3

wie Beispiel 1 aber Dosierung Zulauf 3 mit nicht konstanter Rate (steigende Dosiergeschwindigkeit):

| Dosiergeschwindigkeit [g/h] | Dauer [min.] |
|---|---|
| 27,6 | 22 |
| 33,6 | 22 |
| 39,6 | 22 |
| 45,6 | 22 |
| 51,6 | 22 |
| 59,4 | 22 |
| 64,2 | 22 |
| 70,8 | 26 |

Beispiel 4

wie Beispiel 1 aber:

Zulauf 3: 181 g Mesaconsäure (4%)

Beispiel 5

Wie Beispiel 1, aber Zugabe der 50% wäßr. Lsg. von 2-Acrylamido-2-methylpropansulfonsäure über einen separaten Zulauf 3 innerhalb 1h30min, beginnend zeitgleich mit Zulauf 1.

Beispiel 6

Wie Beispiel 1, aber

a) 77 g Itaconsäure (20%) im Zulauf 3 und 154 g statt 158 g entionisiertes Wasser im Zulauf 1

b) 84 g Itaconsäure (20%) im Zulauf 3 und 150 g statt 158 g entionisiertes Wasser im Zulauf 1

c) 91 g Itaconsäure (20%) im Zulauf 3 und 145 g statt 158 g entionisiertes Wasser im Zulauf 1

d) 98 g Itaconsäure (20%) im Zulauf 3 und 141 g statt 158 g entionisiertes Wasser im Zulauf 1

Beispiel 7

wie Beispiel 1, aber
140 g Itaconsäure (20%) im Zulauf 3 und 116 g statt 158 g entionisiertes Wasser im Zulauf 1.

Beispiel 8

wie Beispiel 1, aber in Zulauf 1 statt 7,5 g der 50% wäßr. Lsg. von 2-Acrylamido-2-methylpropansulfonsäure 15 g der 50% wäßr. Lsg. von 2-Acrylamido-2-methylpropansulfonsäure sowie 112 g statt 158 g entionisiertes Wasser. Außerdem 140 g Itaconsäure (20%) im Zulauf 3.

Beispiel 9

wie Beispiel 1, aber in Zulauf 1 statt 10,5 g der 50% wäßr. Lsg. von 2-Acrylamido-2-methylpropansulfonsäure 22,5 g der 50% wäßr. Lsg. von 2-Acrylamido-2-methylpropansulfonsäure sowie 110 g statt 158 g entionisiertes Wasser. Außerdem 140 g Itaconsäure (20%) im Zulauf 3.

Beispiel 10

wie Beispiel 1, aber:

| | | |
|---|---|---|
| Zulauf 3: | 52,5 g | Itaconsäure (20%) |
| | 1,8 g | Acrylsäure |

sowie im Zulauf 1: 169 g statt 158 g entionisiertes Wasser.

Beispiel 11

wie Beispiel 1 aber

| | | |
|---|---|---|
| Zulauf 3: | 35 g | Itaconsäure (20%) |
| | 3,6 g | Acrylsäure |

sowie im Zulauf 1: 179 g statt 158 g entionisiertes Wasser.

Beispiel 12

wie Beispiel 1 aber Dosierung von Zulauf 3 nach 1 h45min. in 1 h15min. sowie

a) Zulauf 3: 70 g Itaconsäure (20%)

b) Zulauf 3: 52,5 g Itaconsäure (20%)
sowie im Zulauf 1: 169 g statt 158 g entionisiertes Wasser.

c) Zulauf 3: 35 g Itaconsäure (20%)
sowie im Zulauf 1: 179 g statt 158 g entionisiertes Wasser.

Beispiel 13

a) wie Beispiel 1 aber Zulauf 3 nach 120 min in 60 min zudosieren

b) wie Beispiel 1 aber Zulauf 3 nach 105 min in 75 min zudosieren

c) wie Beispiel 1 aber Zulauf 3 nach 75 min in 105 min zudosieren

d) wie Beispiel 1 aber Zulauf 3 nach 60 min in 120 min zudosieren

Beispiel 14

Wie Vergleichsbeispiel 1 aber Dosierung der Itaconsäure über einen separaten Zulauf 3, wobei Zulauf 1 und 2 in 3 h zudosiert wurden, und nach 1,5 h wurde Zulauf 3 in 1,5 h zudosiert.

Beispiel 15

wie Beispiel 14 aber:

Zulauf 1, 2 und 3 wurde gleichzeitig gestartet und 50% des Zulaufs 3 in 45 min. zugefahren. Nach 2h15min. wurden die restlichen 50% des Zulaufs 3 in 45 min. zugefahren.

Beispiel 16

wie Beispiel 14 aber

| | | |
|---|---|---|
| Zulauf 3: | 105 g | Itaconsäure (50%) |
| | sowie im Zulauf 137 g statt 158 g entionisiertes Wasser. | |

Beispiel 17

wie Beispiel 10, aber Start des Zulaufs 3 1h30min nach Start der Zuläufe 1 und 2, sowie Dosierung des Zulaufs 3 in 1h30min.

Beispiel 18

Wie Vergleichsbeispiel 1 aber Dosierung der Itaconsäure über einen separaten Zulauf 3, wobei Zulauf 1, 2 und 3 gleichzeitig gestartet wurden. Zulauf 1 und 2 wurden in 3 h zudosiert, während Zulauf 3 innerhalb von 1,5 h zudosiert wurde.

Beispiel 19

wie Beispiel 1 aber Dosierung Zulauf 3 mit nicht konstanter Rate (sinkende Dosiergeschwindigkeit):

| Dosiergeschwindigkeit [g/h] | Dauer [min.] |
|---|---|
| 60 | 22 |
| 57 | 22 |
| 54 | 22 |
| 51 | 22 |
| 48 | 22 |
| 45 | 22 |
| 42 | 22 |
| 39 | 26 |

Beispiel 20

wie Beispiel 1 aber Dosierung Zulauf 3 mit nicht konstanter Rate (sinkende Dosiergeschwindigkeit):

| Dosiergeschwindigkeit [g/h] | Dauer [min.] |
|---|---|
| 70,8 | 22 |
| 64,8 | 22 |

(fortgesetzt)

| Dosiergeschwindigkeit [g/h] | Dauer [min.] |
|---|---|
| 58,8 | 22 |
| 52,8 | 22 |
| 46,8 | 22 |
| 40,8 | 22 |
| 34,8 | 22 |
| 28,2 | 26 |

Beispiel 21

wie Beispiel 1 aber Dosierung Zulauf 3 mit nicht konstanter Rate (sinkende Dosiergeschwindigkeit):

| Dosiergeschwindigkeit [g/h] | Dauer [min.] |
|---|---|
| 60 | 22 |
| 57 | 22 |
| 54 | 22 |
| 51 | 22 |
| 48 | 22 |
| 45 | 22 |
| 42 | 22 |
| 39 | 26 |

Beispiel 22

wie Beispiel 1 aber Dosierung Zulauf 3 mit nicht konstanter Rate (sinkende Dosiergeschwindigkeit):

| Dosiergeschwindigkeit [g/h] | Dauer [min.] |
|---|---|
| 70,8 | 22 |
| 64,8 | 22 |
| 58,8 | 22 |
| 52,8 | 22 |
| 46,8 | 22 |
| 40,8 | 22 |
| 34,8 | 22 |
| 28,2 | 26 |

Beispiel 23

Wie Beispiel 18, aber Dosierung Zulauf 3 in 30 min.

Beispiel 24

Wie Beispiel 18, aber 5,2% Zulauf 3 in der Vorlage.

Beispiel 25

Wie Beispiel 18, aber:

| | | |
|---|---|---|
| Zulauf 3: | 52,5 g | Itaconsäure (20%) |
| | 1,8 g | Acrylsäure |
| | sowie im Zulauf 1: 169 g statt 158 g entionisiertes Wasser. | |

Beispiel 26

wie Beispiel 18 aber:

| | |
|---|---|
| Zulauf 3: | 105 gltaconsäure (20%) |
| | sowie im Zulauf 1: 137 g statt 158 g entionisiertes Wasser. |

Beispiel 27

Wie Vergleichsbeispiel 3, aber Zugabe von Acrylsäure über einen separaten Zulauf 3 erst nach 1h15min. und Dosierung über einen Zeitraum von 1 h15min.

Beispiel 28

Wie Vergleichsbeispiel 3, aber Zugabe von Acrylamid über einen separaten Zulauf 3 erst nach 1 h15min und Dosierung über einen Zeitraum von 1 h15min.

Beispiel 29

Wie Vergleichsbeispiel 3, aber Zugabe von Acrylsäure und Acrylamid über einen separaten Zulauf 3 erst nach 1h15min. und Dosierung über einen Zeitraum von 1 h15min.

Beispiel 30

Wie Vergleichsbeispiel 3, aber Zugabe von Acrylsäure über einen separaten Zulauf 3 innerhalb 1h15min, beginnend zeitgleich mit Zulauf 1.

Beispiel 31

Wie Vergleichsbeispiel 3, aber Zugabe von Acrylamid über einen separaten Zulauf 3 innerhalb 1h15min, beginnend zeitgleich mit Zulauf 1.

Beispiel 32

Wie Vergleichsbeispiel 3, aber Zugabe von Acrylsäure und Acrylamid über einen separaten Zulauf 3 innerhalb 1 h15min, beginnend zeitgleich mit Zulauf 1.

Anwendungstechnische Prüfung: Naßbeschichtung (Abmusterung nach 5 Tagen + 60 °C Wasserdampfbad)

Zur Bestimmung der Eigenschaften wurden je 100 g der Dispersionen mit 0,5 g eines Entschäumers (Tego Foamex® 822 der Th. Goldschmidt AG) und 5 g eines technischen Gemisches der Di-n-butylester der Bernstein-, Glutar- und Adipinsäure versetzt. Die so konfektionierten Dispersionen wurden mittels einer Spritzpistole auf einen "grünen" Slurrydachstein aufgebracht (Auftrag etwa 20 g/Stein; etwa 320 g/$m^2$ sog. Nassauftrag (Als "grüner" Betonstein diente ein Flachstein mit den Abmessungen 30 X 20 X 1,8 cm, der durch Extrusion eines Mörtels aus Sand (Korngröße bis 0,3 mm) und Zement (Gewichtsverhältnis, Sand/Zement 4:/1 sowie Wasser (Wasser/Zement-Gewichtsverhältnis 1:2,5) hergestellt wurde)). Auf den grünen Betondachstein wurde sofort ein Zementslurry mit ca. 1 mm Dicke aufgetragen (Feinmörtel aus 86 Teilen Sand (Korngröße bis 0,3 mm), 4,8 Teilen Eisenoxidrotpigment, 74 Teilen Zement sowie 52 Teilen Wasser und 1 Teil Betonverflüssiger). Anschließend trocknete man 2 h bei 40°C und 75 % rel. Luftfeuchte und dann 5 h bei 40 °C und 95 % rel. Luftfeuchte. Nach der Trocknung legte man den Stein 5 Tage mit dem Gesicht auf ein 60 "C warmes Wasserbad.

Sofort nachdem man den Dachstein vom Wasserbad nimmt, beurteilt man in feuchtem Zustand das Weißanlaufverhalten.

1 kein Weißanlaufen
2 wenige weißen Punkte
3 wenige weiße Flecken
4 einige größere weiße Flächen
5 weiße Fläche

Nach dem Abtrocknen wurde der Grad der Ausblühungen visuell beurteilt. Hierfür wird folgende Notenskala zugrunde gelegt.

0 = keine Ausblühungen
1 = fast keine Ausblühungen
2 = leichte Ausblühungen
3 = mäßige Ausblühungen
4 = starke Ausblühungen
5 = sehr starke Ausblühungen

Zur Bestimmung der Farbveränderung von beschichteten Betonsteinen, die einer Bewitterung ausgesetzt sind, beschichtete man "grüne" Betonsteine in der oben beschriebenen Weise mit den beschriebenen Klarlacken. Anschließend setzte man den Stein 5 Tage einem 60 °C warmen Wasserbad aus. Nach dem Abtrocknen wurde der Helligkeitsunterschied zwischen den bewitterten und den nicht bewitterten Stellen visuell beurteilt. Hierfür legte man eine Skala von 0 bis 2 zugrunde. Die Ergebnisse sind in Tabelle 4 zusammengefasst.

0 = kein Unterschied
1 = schwach erkennbarer Unterschied
2 = deutlich erkennbarer Unterschied

Die Prüfung "optischer Eindruck" beschreibt die Qualität der Beschichtung in ihrer Gesamtheit ohne vorherige Belastung: Wichtig ist eine gleichmäßige, leicht glänzende Optik des beschichteten Dachsteins ohne Fehlstellen.
Konfektionierung für Slurrydachsteinbeschichtungen

| | |
|---|---|
| Dispersion | 100 |
| Butyldiglycol/$H_2O$ (1:1) | 20 |
| Methylpropionsäure-2,2,4-trimethyl-1,3-pentandiester | 10 |
| Entschäumer auf Basis von Polyethersiloxanen | 2,5 |
| Microbiozid auf Basis von Isothiazolonen | 1 |

b beansprucht
u unbeansprucht

Tabelle 1. Anwendungstechnische Prüfung auf Slurry-Betondachsteinen

| Beispiel | Dachstein | | Flachteil | |
|---|---|---|---|---|
| | Farbunterschied trocken zwischen u und b | Weißanlaufen | Ausblühungen *an Löchern **am Rand | Optischer Eindruck |
| Vgl. 1 | 1 | 3-4 | 0 | mäßig |
| Vgl. 2 | 1 | 2-3 | 0-1 | mäßig |
| 1 | 0 | 1 | 0-1 | sehr gut |
| 2 | 0 | 3 | 2 | gut |
| 3 | 0 | 4 | 1,5 | gut |
| 4 | 0-1 | 3 | 1-2 | gut |

(fortgesetzt)

| Beispiel | Dachstein | | Flachteil | |
|---|---|---|---|---|
| | Farbunterschied trocken zwischen u und b | Weißanlaufen | Ausblühungen *an Löchern **am Rand | Optischer Eindruck |
| 5 | 1 | 3 | 0 | mittel |
| 6 a | 0-1 | 1-2 | 0 | mäßig |
| 6b | 0 | 1-2 | 0 | mäßig |
| 6c | 0-1 | 1-2 | 0 | mäßig |
| 6d | 0-1 | 1-2 | 0 | mäßig |
| 7 | 1 | 3 | */** | mäßig |
| 8 | 1-2 | 2 | */** | mäßigschlecht |
| 9 | 0-1 | 2 | */** | gut-mäßig |
| 10 | 1 | 2 | 2-3 | mäßig |
| 11 | 1 | 2 | 2 | mäßig |
| 12a | 1-2 | 1 | * | gut-mäßig |
| 12b | 1-2 | 1 | 0 | gut-mäßig |
| 12c | 1-2 | 1 | * | gut-mäßig |
| 13a | 0-1 | 1 | * | gut |
| 13b | 0-1 | 1 | * | gut |
| 13c | 0-1 | 1-2 | * | gut |
| 13d | 0-1 | 2 | * | gut |
| 15 | 0-1 | 4 | 0 | gut-mäßig |
| 16 | 1 | 4 | 0 | Kristalle im Film |
| 17 | 0 | 3-4 | 0-1 | mäßig |
| 23 | 1 | 5 | 0 | mäßig |
| 24 | 1 | 3 | 0 | gut - mäßig |
| 25 | 0 | 4 | 0-1 | mäßig |
| 26 | 0-1 | 5 | 0 | |

Anwendungstechnische Prüfung auf Bitumenplatten: Regentest (7 Tage)

Weißanlaufen

Benotungsschlüssel:

1 kein Weißanlaufen
2 wenige weißen Punkte
3 wenige weiße Flecken
4 einige größere weiße Flächen
5 weiße Fläche

| Beispiel | Weißanlaufen* |
|---|---|
| 14 | 5 |

(fortgesetzt)

| Beispiel | Weißanlaufen* |
|---|---|
| 15 | 3 |
| 18 | 1 |
| 23 | 4 |
| 24 | 2 |
| *nach 7 Tagen Regentest | |

Anwendungstechnische Prüfung in Dispersionen für Buntsteinputze

Prüfmethode Weißanlaufen

Mit einem Rakel werden 250μ-Filme auf schwarze Kunststoffolie (Lenetafolie) aufgezogen und anschließend in ein Wasserbad gestellt. Das Weißanlaufen wird nach 2 Tagen optisch begutachtet.

Benotungsschlüssel:

1 kein Weißanlaufen
2 wenige weißen Punkte
3 wenige weiße Flecken
4 einige größere weiße Flächen
5 weiße Fläche

| Beispiel | Weißanlaufen |
|---|---|
| Vgl. 3 | 3-4 |
| 27 | 3-4 |
| 28 | 4 |
| 29 | 5 |
| 30 | 2 |
| 31 | 3 |
| 32 | 0 |

**Patentansprüche**

1. Verfahren zur Herstellung wässriger Polymerisatdispersionen, deren in disperser Verteilung befindliches Polymerisat P, **dadurch gekennzeichnet ist, dass** das Polymerisat P der wäßrigen Polymerisatdispersion wenigstens ein polares Monomeres mit einer Wasserlöslichkeit von größer als 50g/Liter (gemessen bei 20 °C) in radikalisch polymerisierter Form einpolymerisiert enthält, hergestellt durch radikalisch initiierte wässrige Emulsionspolymerisation, wobei das polare Monomere während des Polymerisationsprozesses mit variabler, das heißt nicht konstanter Geschwindigkeit dosiert wird, und, **dadurch gekennzeichnet, dass** deren in disperser Verteilung befindliches Polymerisat P wenigstens eine ethylenisch ungesättigte Säure und/oder deren konjugierte Base in radikalisch polymerisierter Form einpolymerisiert enthält,und,
**dadurch gekennzeichnet, dass** das Polymerisat P der wäßrigen Polymerisatdispersion wenigstens ein Monomeres der allgemeinen Formel I

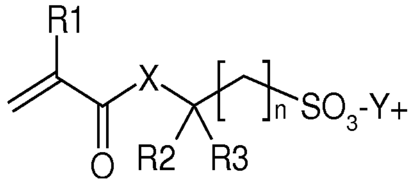

(I)

in der die Variablen folgende Bedeutung haben:

n = 0 bis 2
R1, R2, R3 = unabhängig voneinander Wasserstoff oder Methylgruppe X = O oder NH
Y = H, Alkalimetall, $NH_4$
sowie wenigstens ein radikalisch polymerisierbares Monomeres II, welches mindestens zwei COOX-Gruppen (wobei X = H, Metall) in radikalisch polymerisierter Form einpolymerisiert enthält, erhältlich durch radikalisch initiierte wässrige Emulsionspolymerisation, wobei mindestens eines der beiden Monomere I oder II während des Polymerisationsprozesses mit variabler, das heißt nicht konstanter Geschwindigkeit, zum Reaktionsgemisch dosiert wird.

2. Verfahren gemäß Anspruch 1, **dadurch gekennzeichnet, dass** die Monomere I, ausgewählt sind aus der Gruppe 2-Acrylamido-2-methyl-propansulfonsäure (AMPS), Methacrylsäure-(3'-sulfopropyl)-ester, Acrylsäure-(3'-sulfopropyl)-ester, Methacrylsäure-(2'-sulfoethyl)-ester.

3. Verfahren gemäß Anspruch 1 oder 2, **dadurch gekennzeichnet, dass** die Monomere II, ausgewählt sind aus der Gruppe Itaconsäure, Aconitsäure, Mesaconsäure.

**Claims**

1. A process for preparing aqueous polymer dispersions whose dispersed addition polymer P comprises, copolymerized in free-radically polymerized form, at least one polar monomer having a water solubility of greater than 50 g/liter (measured at 20°C), and prepared by free-radically initiated aqueous emulsion polymerization, the polar monomer being metered during the polymerization process at a variable, i.e., nonconstant rate, and
whose dispersed addition polymer P comprises, copolymerized in free-radically polymerized form, at least one ethylenically unsaturated acid and/or its conjugated base, and
wherein the polymer P of the aqueous polymer dispersion comprises at least one monomer of the general formula I

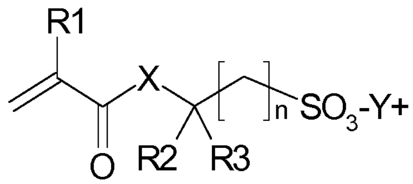

(I)

in which the variables have the following definitions:

n = 0 to 2
R1, R2, R3 = independently of one another hydrogen or methyl group
X = 0 or NH
Y = H, alkali metal, $NH_4$
and also at least one free-radically polymerizable monomer II which comprises, copolymerized in free-radically polymerized form, at least two COOX groups (where X = H, metal), and obtainable by free-radically initiated aqueous emulsion polymerization, at least one of the two monomers, I or II, being metered to the reaction mixture during the polymerization process at a variable, i.e., nonconstant rate.

2. The process according to claim 1, wherein the monomers I are selected from the following group: 2-acrylamido-2-methyl-propanesulfonic acid (AMPS), 3'-sulfopropyl methacrylate, 3'-sulfopropyl acrylate, 2'-sulfoethyl methacrylate.

3. The process according to claim 1 or 2, wherein the monomers II are selected from the following group: itaconic acid,

aconitic acid, mesaconic acid.

## Revendications

1. Procédé pour la préparation de dispersions aqueuses de polymère, dont le polymère P se trouvant en répartition dispersée est **caractérisé en ce que** le polymère P de la dispersion aqueuse de polymère contient au moins un monomère polaire présentant une solubilité dans l'eau supérieure à 50 g/litre (mesurée à 20°C), copolymérisé sous forme polymérisée par voie radicalaire, préparé par polymérisation en émulsion aqueuse initiée par voie radicalaire, le monomère polaire étant dosé pendant le procédé de polymérisation à une vitesse variable, c'est-à-dire non constante et **caractérisé en ce que** son polymère P se trouvant en répartition dispersée contient au moins un acide éthyléniquement insaturé et/ou sa base conjuguée copolymérisé sous forme polymérisée par voie radicalaire **caractérisé en ce que** le polymère P de la dispersion aqueuse de polymère contient au moins un monomère de formule générale I

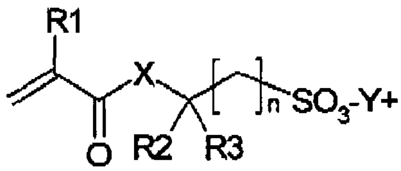

(I)

dans laquelle les variables ont la signification suivante :

n = 0 à 2
R1, R2, R3 = indépendamment les uns des autres, hydrogène ou méthyle,
X = 0 ou NH
Y = H, métal alcalin, $NH_4$
ainsi qu'au moins un monomère II polymérisable par voie radicalaire, qui contient au moins deux groupes COOX (X = H, métal), copolymérisé sous forme polymérisée par voie radicalaire, pouvant être obtenu par polymérisation en émulsion aqueuse initiée par voie radicalaire, au moins un des deux monomères I ou II étant dosé pendant le procédé de polymérisation à une vitesse variable, c'est-à-dire non constante.

2. Procédé selon la revendication 1, **caractérisé en ce que** les monomères I sont choisis dans le groupe de l'acide 2-acrylamido-2-méthylpropanesulfonique (AMPS), l'ester 3'-sulfopropylique de l'acide méthacrylique, l'ester 3'-sulfopropylique de l'acide acrylique, l'ester 2'-sulfoéthylique de l'acide méthacrylique.

3. Procédé selon la revendication 1 ou 2, **caractérisé en ce que** les monomères II sont choisis dans le groupe de l'acide itaconique, aconitique, mésaconique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4340510 A
- GB 1505558 A
- US 3196122 A
- US 3043790 A
- US 3239479 A
- DE 4317035 A
- DE 4317036 A
- JP 911131533 A
- JP 55144273 A
- DE 2164256 A
- DE 3901073 A
- DE 2164256
- DE 3827975 A
- DE 4003909 A
- EP 469295 A
- DE 19514266 A
- DE 10343726
- EP 915071 A
- EP 821660 A
- WO 2008152017 A
- EP 320865 A
- DE 4003422 A
- US 4269749 A
- EP 40419 B
- DE 4435423 A
- DE 4419518 A
- DE 4435422 A
- EP 417568 A


### In der Beschreibung aufgeführte Nicht-Patentliteratur


- Ullmanns Encyclopädie der technischen Chemie. Verlag Chemie, 1980, vol. 19, 17, , 18
- Ullmann's Encyclopedia of Industrial Chemistry. VCH Weinheim, 1992, 169
- **ZOSEL.** *Farbe und Lack,* 1976, vol. 82, 125-134
- **T.G. FOX.** *Bull. Am. Phys.Soc. (Ser.II),* 1956, vol. 1, 123
- Ullmanns Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOL. J. Wiley, 1975
- POLYMER HANDBOOL. J. Wiley, 1989
- Encyclopedia of Polymer Science und Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** Chemie in unserer Zeit. 1990, vol. 24, 135-142
- Emulsion Polymerization. Interscience Publishers, 1965
- **F. HÖLSCHER.** Dispersionen synthetischer Hochpolymerer. Springer-Verlag, 1969
- *J. of Colloid and Interface Science,* 1990, vol. 135, 165-177
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Thieme Verlag, 1961, vol. XIV/1, 192-208
- Encyclopedia of Polymer Science and Technology. John Wiley & Sons Inc, 1966, vol. 5, 847